# EUROPEAN PATENT APPLICATION

(11) **EP 1 273 978 A2**
(43) Date of publication of application: **08.01.2003**
(21) Application number: 02254729.3
(22) Date of filing: 05.07.2002
(51) Int. Cl.: G03G 15/00, G06F 3/023

(54) **Method for setting a function and a setting item by selectively specifying a position in a tree-structured menu**

(30) Priority: 06.07.2001 JP 2001206552; 13.07.2001 JP 2001213111; 24.08.2001 JP 2001254753; 10.09.2001 JP 2001272955
(71) Applicant: Ricoh Company, Ltd., Tokyo 143-8555 (JP)
(72) Inventor: Takatsu, Kazunori, Yokohama-shi, Kanagawa (JP); Sakayori, Tetsuya, Yokohama-shi, Kanagawa (JP); Yamane, Jun, Yokohama-shi, Kanagawa (JP)
(74) Representative: Leeming, John Gerard

(57) **Abstract**

When a device has a plurality of functions and setting items ("1."-"6."), a particular function and a particular setting item are selected from among a plurality of those functions and setting items ("1."-"6."). A menu having a tree structure is used in this selection by specifying a position in the tree structure so as to set the function and the setting item. The tree structure of the menu classifies the functions and the setting items.

## Description

The present invention generally relates to a function setting inputting method and device, a setting operation device for an image forming apparatus, and an apparatus operation device, and more particularly, relates to a function setting inputting method applied to a user interface of a device requiring a user to perform a complicated input operation, such as multi-function peripherals (MFP) having functions of a plurality of devices including a copying machine, a facsimile device and a printer device, an ATM, or a ticket-vending machine, relates to a function setting inputting device using the function setting inputting method for apparatuses, such as multi-function peripherals, an ATM, or a ticket-vending machine, relates to a setting operation device for an image forming apparatus applying voice recognition/synthesis to a user interface of a copier, a fax, a printer, a scanner, and multi-function peripherals of these devices for a visually handicapped user, relates to an apparatus operation device which enables various operations in consideration of a visually handicapped user in operating a copying apparatus, a facsimile apparatus, a printer apparatus, a scanner apparatus, or multi-function peripherals integrating functions of these OA apparatuses, and relates to program code realizing a function of the apparatus operation device, a computer readable recording medium storing the program code, and an image forming apparatus.

In relation to a technology for selecting and setting various functions of a device, such as a copying machine or multi-function peripherals, the following inventions are conventionally known.

In the invention of a "mode inputting method for a copying machine" disclosed in Japanese Patent No. 2554325, various functions of a copying machine are set in a predetermined order of, for example, "size of originals", "size of forms", "double-side mode", and so forth. In this course, each of the setting items, such as "Size of originals", is set by inputting a predefined number, such as "1: A3", "2: A4", "3: A4R" or "4: A5", by means of a numeric keypad. Adopting this method . enables a complicated function setting by using only the numeric keypad.

In the invention of an "operation panel of a copying machine" disclosed in Japanese Laid-Open Patent Application No. 5-181337, upon setting various functions of a copying machine, a user can move to a particular setting screen by inputting a corresponding menu number.

The invention of "multi-function peripherals" disclosed in Japanese Laid-Open Patent Application No. 10-117258 facilitates identification of frequently used keys in multi-function peripherals (a device having a plurality of functions including copying, faxing and printing) operated according to an audio guidance.

As such devices have been made highly functional, user interfaces for a user to use and operate these functions have also become complicated. Taking a copying machine as an example, whereas setting items for a conventional copying machine are "setting of number of copies", "setting of magnification", "double-side copy", "sorting or not", "setting of density" and so forth at most, a latest digital copying machine requires a wide range of operations, such as a longitudinally/transversely free magnification, a simple bookbinding, a consolidating function of consolidating a plurality of pages into one sheet, an editing function of setting a margin, a date stamp and so forth, and a document-accumulative function. However, since a physical size of an operation panel is limited, the operation panel cannot be provided with buttons or the like corresponding to all of such functions.

Facing a problem like this, the foregoing "mode inputting method for a copying machine" disclosed in Japanese Patent No. 2554325 attempts to provide a relatively simple setting manner realized by setting various functions in a predetermined order. For example, when it is predetermined that a setting is performed in an order of "size of originals", "cassette of forms", "setting of magnification", "double-side mode", "sorting or not", and "setting of density", a user inputs "1, 1, 1, 2, 2, 1", for example, by using a numeric keypad. Thus, various settings are performed by judging a correspondence between each of the setting items and predetermined numerals, such as "1" for "size of originals" meaning A4, "1" for "cassette of forms" meaning Tray 1, "1" for "setting of magnification" means magnification unchanged, "2" for "double-side mode" means double-side printing for one-sided original, "2" for "sorting or not" means sorting required, and "1" for "setting of density" means automatic density setting.

However, conversely, the above-described method rather complicates operations for devices, such as a latest digital copying machine having numerous setting items. For instance, even when a user intends to change only one setting item, the user has to input all of the setting items including setting items not subject to change. Further, these days, there are tens of functions to be supported; thus, it is substantially impossible to remember all these numerals and the order.

When a device has numerous setting items as mentioned above, it is difficult to allocate all functions to hard keys; therefore, recently, a touch panel is frequently used to solve this problem. When using a touch panel, it is also difficult to display all of the functions in one screen; therefore, a user provides a setting for each of the functions as the user switches windows. However, since there are numerous functions, an infrequently used function may be positioned deep down in tiers of functions, which complicates operations to reach a window for setting an item to be set.

To solve this problem, in the foregoing "operation panel of a copying machine" disclosed in Japanese Laid-Open Patent Application No. 5-181337, menu numbers are allocated to various function setting screens so that a user can move to an intended setting screen by inputting a corresponding menu number. According to this invention, a user can move to a particular setting screen relatively easily, by remembering a menu number of a frequently used function.

On the other hand, using a touch panel adversely causes a usage difficulty.

For example, a visually handicapped user cannot utterly use a touch panel having keys unrecognizable by the sense of touch. In addition, for a wheelchair user who is unable to see a liquid crystal display positioned at an upper part of the device, it is impossible to operate the touch panel by groping.

To solve these problems, in the invention of the "multi-function peripherals" disclosed in Japanese Laid-Open Patent Application No. 10-117258, multi-function peripherals having functions including copying, faxing and printing are operated according to an audio guidance. That is, as performed in a facsimile information service, a user is prompted to input numerals and so forth following an audio guidance so as to provide various settings through a series of dialogues. Further, in this invention, frequently used hard keys are provided with different feels so that a user can easily identify the keys upon the above-mentioned input. However, according to such a navigation method as above, it takes a very long setting time to perform only a simple setting. On the other hand, limiting the number of functions provided with an audio guidance for the purpose of shortening the setting time results in a user being unable to set a function provided with no audio guidance without any assistance from others, which imposes an inconvenience on the user. Besides, when a user becomes willing to change a previously made setting item in the course of a setting, it is difficult to go back and change the setting.

Also, recently, an image forming apparatus has become multifunctional drastically due to such factors as an introduction of digital technology. Therefore, it has also become difficult to support all of numerous setting items by operating with only conventional hard keys. Thereupon, there is a trend that a setting operation using a setting operation device, such as a liquid crystal touch panel, is being introduced positively.

However, in consideration of usage for a visually handicapped user, the above-mentioned trend results in causing a crucial barrier. Whereas a visually handicapped user can perform a tactual operation of hard keys to some extent by remembering a layout of the hard keys, it is not possible at all for the visually handicapped user to operate virtual buttons displayed on a liquid crystal touch panel which cannot be perceived by the sense of touch.

At this point, Japanese Laid-Open Patent Application No. 10-117263 "Multi-function peripherals" provides a description of multi-function peripherals composed of devices, such as a copier, a facsimile, and a printer, operable according to an audio guidance.

By using the above-mentioned multi-function peripherals described in Japanese Laid-Open Patent Application No. 10-117263, a visually handicapped user, or a user who is unable to use the sense of vision for some reason, can use basic functions by performing a sequence of operations according to an audio guidance. However, whereas such a sequential setting method according to an audio guidance is easy to understand at first, an operation time thereof cannot be expected to be shortened even after the user becomes used to the device. Additionally, the user cannot perform operations other than the prepared sequence of operations; thus, it is not supposed that a visually handicapped user can access all functions as a visually non-handicapped user does. This is an obstruction against a social participation of the visually handicapped.

Also, recently, since various functions have been provided in apparatuses, such as a copying apparatus, a facsimile apparatus, a printer apparatus, a scanner apparatus, and multi-function peripherals (MFP) integrating functions of these OA apparatuses, it becomes impossible to operate these apparatuses only with a numeric keypad and function keys. Thereupon, a touch-panel input method has become prevalent. In the touch-panel input method, a touch panel is provided on a display, and a character indicating an operational procedure and a picture indicating an input area are displayed on a screen. A user touches the input area preset corresponding to the picture so as to input information, etc.

For reasons such as promoting a social advancement of physically handicapped people, it is preferable that an office environment be made ready for the visually handicapped to be able to work as does the visually non-handicapped. Especially, in the United States, Article 508 of Rehabilitation Act has been enforced since June 21, 2001, such that the U.S. Federal Government is obligated to purchase apparatuses usable for the visually handicapped in procuring IT apparatuses, which is a trend beginning to be followed by state governments, related institutions, and private businesses.

The above-mentioned MFP tends to involve more and more complicated operations so that one cannot correctly use the apparatus without instructions being displayed on a display panel or a touch panel, etc. Therefore, especially for the visually handicapped, it is practically difficult to use the MFP.

For example, a visually handicapped user has difficulty in operating the MFP because the user cannot see a valid touch area in the touch panel. The visually handicapped user must remember procedures of operations and positions of touch areas beforehand in order to operate the MFP. However, when procedures of operations and positions of touch areas of the MFP are changed, the procedures of operations and the positions of touch areas that the user remembers become invalid.

To solve this problem, there is a device which performs an audio guidance by using a voice synthesis device, and performs a braille guidance by using a Braille output device, when a user is recognized to be a visually handicapped user by an insertion of an ID card memorizing information identifying the user as visually handicapped, or an earphone to the MFP.

As for an automatic transaction apparatus, such as a cash dispenser or an automated teller machine, used in financial institutions, the automatic transaction apparatus is provided with brailled keys, a braille output device outputting any braille, and a function of outputting an audio guidance from a handset. When a user is recognized to be a visually handicapped user according to an insertion of an ID card memorizing information identifying the user as being visually handicapped, or an earphone to the automatic transaction apparatus, the automatic transaction apparatus performs an operational guidance by means of the audio guidance from the handset. According to this operational guidance, the user selects a transaction type, or inputs a sum of money by using the brailled keys. Then, the automatic transaction apparatus displays a result of the input operation by the braille output device. Accordingly, even when a visually handicapped user uses the automatic transaction apparatus, the visually handicapped user can conduct a transaction by the user's own operations.

However, in comparison with the number of visually non-handicapped users, there are only a small number of visually handicapped users who need the above-described contrivances. Therefore, it takes a relatively too much cost to provide all apparatuses with equipments contrived for visually handicapped users, who account for only a small number.

In addition, users become confused, when there coexist an automatic transaction apparatus not provided with the braille output device or the handset, and an automatic transaction apparatus provided with the braille output device and the handset located at different positions or used by different methods.

It is a general object of the present invention to provide an improved and useful function setting inputting method and device, a setting operation device for an image forming apparatus, and an apparatus operation device in which the above-mentioned problems are eliminated.

A more specific object of the present invention is to provide a function setting inputting method for enabling a user to access all functions with relative ease by using only a numeric keypad or by using only a numeric keypad and a small number of hard keys, and a function setting inputting device using the function setting inputting method.

Another specific object of the present invention is to provide a setting operation device used for an image forming apparatus for a visually handicapped user, or a user who is unable to use the sense of vision for some reason.

Another specific object of the present invention is to provide an apparatus operation device which enables a visually handicapped user to perform various operations of an apparatus while suppressing a manufacturing cost of the apparatus, and to provide program code realizing a function of the apparatus operation device, a computer readable recording medium storing the program code, and an image forming apparatus.

Still another specific object of the present invention is to provide a device which enables a visually non-handicapped user to assist a visually handicapped user with ease.

In order to achieve the above-mentioned objects, there is provided according to one aspect of the present invention a function setting inputting method for setting a function and a setting item in a device having a plurality of functions and setting items, the method comprising the step of selecting from a menu having a tree structure by specifying a position in the tree structure so as to set the function and the setting item, the tree structure classifying the functions and the setting items.

According to the function setting inputting method of the present invention, various functions are arranged in a tree structure so that a particular function can be set by specifying a position in the tree structure. Therefore, a complicated setting input operation can be performed by using a limited number of keys, such as a numeric keypad.

Additionally, in the function setting inputting method according to the present invention, the device may comprise a numeric keypad, and a number of options in each tier of the tree structure may be equal to or smaller than 10.

According to the function setting inputting method of the present invention, since the number of options in each tier of the tree structure is always equal to or smaller than 10, an opted position does not need to be settled for each tier. Therefore, a position in the tree structure can be specified by numbers by using keys, such as a numeric keypad.

Additionally, in the function setting inputting method according to the present invention, the step of selecting may select from the menu by using a relative position in the tree structure.

According to the function setting inputting method of the present invention, a position in the tree structure can be specified by using a relative position. Therefore, even when a user remembers only menu numbers corresponding to functions on a general-category basis, the user can input various settings without performing complicated operations.

Additionally, in the function setting inputting method according to the present invention, the device may comprise a key used for ascending one tier in the menu.

According to the function setting inputting method of the present invention, the key is used for ascending one tier in the menu. Therefore, when a user has made a faulty setting, the user can easily change the setting. Additionally, the key facilitates successive inputs of related settings.

Additionally, the function setting inputting method according to the present invention may further comprise the step of ascending one tier in the menu automatically after setting the function and the setting item.

According to the function setting inputting method of the present invention, a position in the menu ascends one tier automatically after setting a function. Therefore, a user can easily make a change or a correction after the setting.

Additionally, in the function setting inputting method according to the present invention, the device may comprise a key used for returning to a top of the menu.

According to the function setting inputting method of the present invention, the device comprises a key used for returning to the top of the menu. Therefore, when a user intends to move from deep down in one series of tiers to another menu, or when a user is at a loss to find where the present position is in the tree structure in the course of an operation, the user can return to the top with ease by using the key used for returning to the top of the menu.

In order to achieve the above-mentioned objects, there is also provided according to another aspect of the present invention a function setting inputting device having a plurality of functions and setting items, and setting a function and a setting item therefrom, the device comprising a menu having a tree structure classifying the functions and the setting items, and setting inputting means for selecting from the menu by specifying a position in the tree structure so as to set the function and the setting item.

According to the function setting inputting device of the present invention, a complicated setting input operation, which may require a touch panel and so on, can be realized by using only a limited number of keys, such as a numeric keypad.

Additionally, the function setting inputting device according to the present invention may comprise a plurality of the setting inputting means, wherein one of the setting inputting means includes a touch panel.

According to the function setting inputting device of the present invention, users who feel difficulty in operating a touch panel, such as a visually handicapped user, can operate the device, without adding hardware to the device performing a complicated setting input operation requiring a touch panel and so on.

Additionally, in the function setting inputting device according to the present invention, display screens of the plurality of the setting inputting means may operate in synchronization.

According to the function setting inputting device of the present invention, display screens of the setting inputting means operate in synchronization with a display screen of a touch panel. Therefore, when users who feel difficulty in operating a touch panel, such as a visually handicapped user, come to a deadlock in operating the device, another user can provide assistance with ease.

Additionally, in the function setting inputting device according to the present invention, a user may be informed aurally in synchronization with an operation of the setting inputting means.

According to the function setting inputting device of the present invention, informing a user aurally enables information concerning a confirmation of a setting, an operational restriction due to a trouble, and so forth to be imparted also to a user who is unable to see a touch panel, such as a visually handicapped user.

In order to achieve the above-mentioned objects, there is also provided according to another aspect of the present invention a setting operation device used for providing a setting for an image formation performed by an image forming apparatus, the device comprising, an image formation setting providing unit used for providing the setting for the image formation by operating a numeric keypad, and a synthetic voice feed back unit outputting a status of the setting by a synthetic voice noticing the status of the setting, wherein a shifting between setting items and a change of set values are performed without using vision.

According to the present invention, a setting can be provided without using a visual device, such as a touch panel; therefore, a visually handicapped user, or a user who is unable to use the sense of vision for some reason, can operate an image forming apparatus.

Additionally, in the setting operation device according to the present invention, the image forming apparatus may comprise a visual display device, and the setting items displayed on the visual display device at one time may be grouped into one page so that each of the shifting between the setting items and the change of the set values is performed divisionally according to a setting scene corresponding to the page, the setting scene transiting to another setting scene in accordance with a screen transition of the visual display device.

According to the present invention, a setting operation device operated by using vision and a setting operation device operable without using vision can be realized by user models having an identical setting system; therefore, a user with vision and a user without vision can work cooperatively and exchange information smoothly.

Additionally, in the setting operation device according to the present invention, the shifting between the setting items may be performed by pressing keys arranged horizontally in the numeric keypad, and the change of the set values may be performed by pressing keys arranged vertically in the numeric keypad. Alternatively, the shifting between the setting items may be performed by pressing keys arranged vertically in the numeric keypad, and the change of the set values may be performed by pressing keys arranged horizontally in the numeric keypad.

According to the present invention, a comprehensible virtual two-dimensional arrangement is realized so as to provide an intelligible image of shifting between setting items and changing set values.

Additionally, in the setting operation device according to the present invention, a name of the setting item and a name of the set value currently selected for the setting item may be noticed by the synthetic voice output by the synthetic voice feed back unit upon performing the shifting between the setting items.

According to the present invention, a setting item or a set value can be quickly recognized so as to improve an operational efficiency of the setting operation device operable without using vision which would otherwise take a long operation time compared with a setting operation device operated by using vision.

Additionally, in the setting operation device according to the present invention, a short distinctive sound may be added immediately before the name of the setting item and the name of the set value currently selected for the setting item are noticed by the synthetic voice feed back unit.

According to the present invention, a setting item and a present set value can be quickly confirmed so as to secure a pseudo view-at-a-glance of setting items and set values, which would otherwise lack in a setting operation device operable without using vision.

Additionally, in the setting operation device according to the present invention, the distinctive sound may have a timbre for the setting item and a group of the set values selectable for the setting item, the timbre being different from timbres for all other setting items, or all other setting items in one setting scene.

According to the present invention, a setting item or a group of set values selectable therefor can be quickly recognized so as to improve an operational efficiency of the setting operation device operable without using vision which would otherwise take a long operation time compared with a setting operation device operated by using vision.

Additionally, in the setting operation device according to the present invention, the distinctive sound may have different timbres at least between the adjacent setting items.

According to the present invention, an act of shifting between setting items can be easily recognized so as to realize a more comprehensible operation.

Additionally, in the setting operation device according to the present invention, the distinctive sound may have a different pitch for each of the set values selectable for the setting item.

According to the present invention, a user who have absolute pitch or the sense of substantially absolute pitch can recognize a set value quickly; this improves an operational efficiency of the setting operation device operable without using vision which would otherwise take a long operation time compared with a setting operation device operated by using vision.

Additionally, in the setting operation device according to the present invention, the distinctive sound may have pitches corresponding to an arrangement order of the set values.

According to the present invention, an act of changing set values and a direction thereof can be easily recognized so as to realize a more comprehensible operation.

Additionally, in the setting operation device according to the present invention, a name of the setting item and a name of the set value located in the page being provided with a setting, and a name of a page to which the page can transit, can be input by a voice recognition.

According to the present invention, a quick transfer to a setting item, a set value or a page becomes possible when a name thereof is known; this improves an operational efficiency of the setting operation device operable without using vision which would otherwise take a long operation time compared with a setting operation device operated by using vision.

Additionally, in the setting operation device according to the present invention, a background sound may be kept being output so as to notice that a setting is being provided for a page corresponding to a pop-up screen temporarily displayed on a preceding screen, and the synthetic voice feed back unit may output the synthetic voice so that the synthetic voice is superimposed on the background sound.

According to the present invention, a setting scene corresponding to a pop-up screen forming a temporary branching, which would otherwise be incomprehensible for a user without vision, can be easily recognized so as to realize an improved operability.

In order to achieve the above-mentioned objects, there is also provided according to another aspect of the present invention an apparatus operation device used by a user to operate an apparatus, the apparatus operation device comprising a function control unit causing an operation of the apparatus to transit to an audio mode when the user is judged to be a visually handicapped user, and an operation control unit controlling operations performed by the user in the audio mode, wherein the operation control unit controls a menu control unit, an operational input unit, and an audio output unit so as to cause the visually handicapped user to operate the apparatus without using vision, the menu control unit arranging operation items of the apparatus as a multi-tier menu containing multiple tiers of setting items and function numbers corresponding thereto so as to manage a shifting to an intended setting item in the multi-tier menu and a selection status of the setting item, the operational input unit used by the user for inputting one of operations of shifting to the setting item and selecting the setting item in the multi-tier menu, and the audio output unit informing the user of a result of the operation by outputting a sound and a voice according to one of the operations of shifting to the setting item and selecting the setting item in the multi-tier menu performed by the user.

Additionally, in the apparatus operation device according to the present invention, the audio output unit may output a sound according to a type of the setting item.

Additionally, in the apparatus operation device according to the present invention, the audio output unit may output different sounds for an upward shifting and a downward shifting in the tiers.

Additionally, in the apparatus operation device according to the present invention, the sound output by the audio output unit may be one of an operational sound, a sound icon and a BGM.

Additionally, in the apparatus operation device according to the present invention, the sound and the voice output by the audio output unit may be variable in pitch, speed, rhythm, tone, and volume.

Additionally, in the apparatus operation device according to the present invention, one of a directional shifting key and a key substitutable therefor may be used in the operational input unit.

Additionally, in the apparatus operation device according to the present invention, the menu control unit may cause the audio output unit to inform the user of information of each of the setting items by outputting a voice when the user performs an operation of confirming the setting item.

Additionally, in the apparatus operation device according to the present invention, the menu control unit may perform a successive shifting to the setting items having contents changed from default contents by the user, and cause the audio output unit to inform the user of the changed contents of the setting items by outputting a voice, when the user performs an operation of confirming the setting items all at one time.

Additionally, in the apparatus operation device according to the present invention, the menu control unit may cause the audio output unit to make an inquiry by outputting a voice to the user as to whether or not a content of each of the setting items be restored to default contents, the setting items being located in the tiers at and below a present operational position in the multi-tier menu, when the user performs an operation of restoring the contents of the setting items to the default contents.

Additionally, in the apparatus operation device according to the present invention, the menu control unit may cause the audio output unit to make an inquiry by outputting a voice to the user as to whether or not contents of all of the setting items be restored to default contents, the setting items being located in the tiers at and below a present operational position in the multi-tier menu, when the user performs an operation of restoring the contents of the setting items to the default contents.

Additionally, the apparatus operation device according to the present invention may further comprise an audio input unit used for inputting a voice of the user, the voice being recognized by a voice recognition, wherein the menu control unit performs a direct shifting to the setting item specified by the voice.

Additionally, in the apparatus operation device according to the present invention, the voice of the user input by using the audio input unit may represent one of a name of the setting item and a function number corresponding to the setting item.

Additionally, the apparatus operation device according to the present invention may further comprise a visual display unit displaying a setting status of each of the setting items, wherein the menu control unit causes the audio output unit to inform the user of a content of the operation of selecting the setting item by outputting a voice, and causes the visual display unit to display the content of the operation of selecting, when the user settles the operation of selecting.

Additionally, the apparatus operation device according to the present invention may further comprise a visual input unit used for inputting the setting item selected from the setting items having the setting status thereof displayed by the visual display unit, wherein the menu control unit causes the audio output unit to inform the user of the setting status of the setting item input by using the visual input unit so as to cause both a visually non-handicapped user and the visually handicapped.user to operate the apparatus.

Additionally, in the apparatus operation device according to the present invention, the operation control unit may cause the audio output unit to inform the user of a result the operation of the apparatus by outputting a sound and a voice during the operation of the apparatus in progress and/or upon completion of the operation of the apparatus..

In order to achieve the above-mentioned objects, there is also provided according to another aspect of the present invention a method, or program code, for causing a computer to function as the above-mentioned apparatus operation device.

In order to achieve the above-mentioned objects, there is also provided according to another aspect of the present invention a computer readable recording medium storing program code for causing a computer to function as the above-mentioned apparatus operation device.

In order to achieve the above-mentioned objects, there is also provided according to another aspect of the present invention an image forming apparatus performing an image formation by using setting items selected and settled with respect to functions of the image forming apparatus, the image forming apparatus comprising the above-mentioned apparatus operation device used by a user for selecting and settling the setting items.

According to the present invention, the apparatus operation device can be also used for a visually handicapped user to perform various operations of an apparatus while suppressing a manufacturing cost of the apparatus, and also can be used for a visually non-handicapped user to assist a visually handicapped user with ease.

Other objects, features and advantages of the present invention will become more apparent from the following detailed description when read in conjunction with the accompanying drawings.
FIG.1 is a list of functions of a copying' machine according to a first embodiment of the present invention;
FIG.2 is a functional tree-structured diagram showing the functions of a copying machine shown in FIG.1 in a tree structure;
FIG.3 shows an example of allocating keys to a numeric keypad in a case of inputting a function setting by using the numeric keypad;
FIG.4 is a diagram illustrating a configuration of a setting operation device for an image forming apparatus according to a second embodiment of the present invention;
FIG.5 is an illustration of a key allocation for treating press-down information of each of keys of a numeric keypad shown in FIG.4 as directional information;
FIG.6 shows an example of one page including an arrangement of setting items and corresponding set values;
FIG.7 is a flowchart of a process, from an initial operation upon transferring to a page, to a shifting between setting items;
FIG.8 is a flowchart of a process of changing set values;
FIG.9 is a flowchart of a process of a page jump ;
FIG.10 is a flowchart of a process of settling a set value or a transfer destination page;
FIG.11 is a flowchart of a voice recognition process;
FIG.12 is an explanatory diagram of a case where a user uses a device according to a third embodiment of the present invention;
FIG.13 is a view illustrating an operation unit provided in the device according to the third embodiment of the present invention;
FIG.14 and FIG.15 are consecutive illustrations showing an example of a (part of) multi-tier menu for a copying machine;
FIG.16 is an illustration showing an example of shifting in the multi-tier menu according to the third embodiment of the present invention;
FIG.17 is an illustration showing an example of allocating functions in a numeric keypad according to the third embodiment of the present invention;
FIG.18 is a functional block diagram of the device according to the third embodiment of the present invention; and
FIG.19 is a block diagram of a device according to a fourth embodiment of the present invention.

A description will now be given, with reference to the drawings, of embodiments according to the present invention.

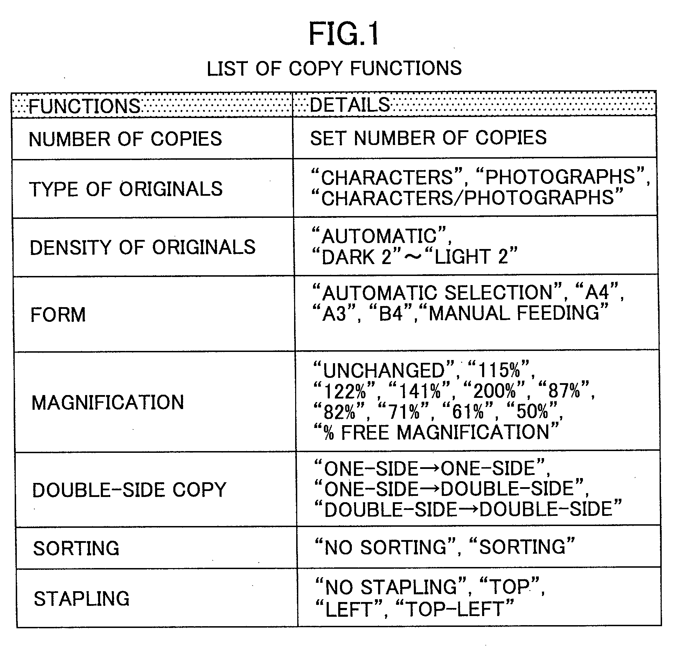

First, a description will be given, with reference to FIG.1 to FIG.3, of a first embodiment according to the present invention. To simplify the description, a copying machine is taken as an example herein.

FIG.1 is a list of functions of a copying machine. Each of the functions shown in FIG.1, i.e., "Number of copies", "Type of originals", "Density of originals", "Form", "Magnification", "Double-side copy", "Sorting", and "Stapling", can be selected and set individually. This example sets forth only a few complicated functions, which does not mean a restriction of the present embodiment.

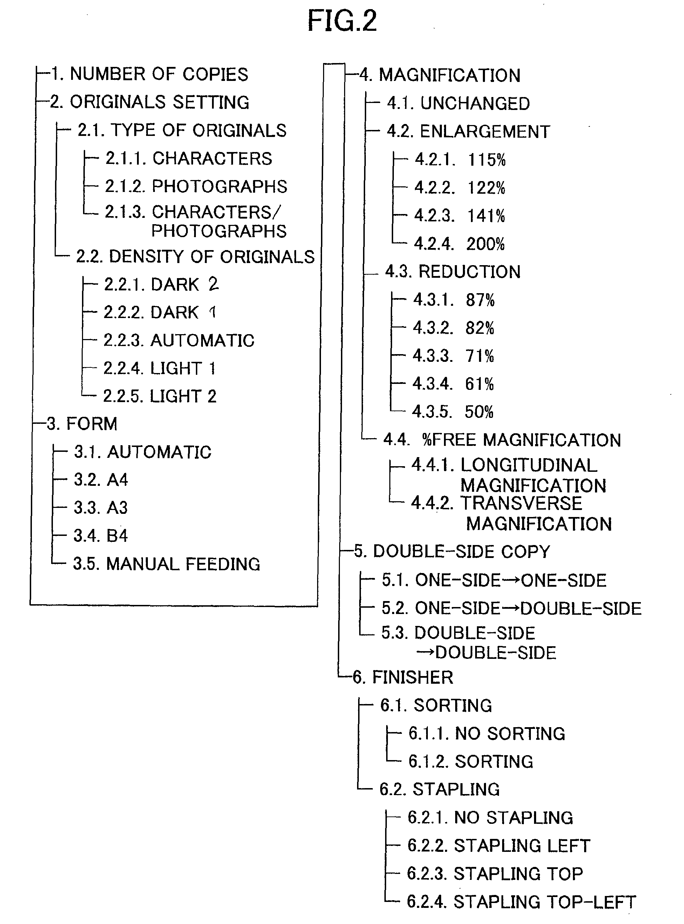

FIG.2 is a functional tree-structured diagram showing the functions of a copying machine shown in FIG.1 in a tree structure.

In the present embodiment, a user provides function settings by using the tree structure shown in FIG.2. For instance, when a user intends to change a magnification setting from a default condition to 115%, the user can provide the magnification setting of 115% by pressing "4", "2", "1" and "Set" keys successively without using a touch panel and so forth. When there are few keys available other than numeric keys, a "#" key can be utilized in place of the "Set" key.

As in the example shown in FIG.2, in which the number of options in each tier of the tree structure is always equal to or smaller than 10, an opted menu number does not need to be settled for each tier.

On the other hand, in a case where the number of options in each tier of a tree structure is equal to or larger than 11, an opted menu number needs to be settled for each tier because it is difficult to distinguish a selection of "4", "11", and "3" from a selection of "4", "1", "1", and "3". Therefore, the number of options in each tier of the tree structure is preferred to be equal to or smaller than 10.

In addition, when the number of options in each tier of the tree structure is prescribed to be in one digit, the following operation also becomes possible; in a setting operation requiring further input of numbers, such as a number of copies, pressing "1" and "Set" keys followed by pressing "4" and "Set" keys, etc. may set the number of copies at four, or alternatively, pressing "1", "4" and "Set" keys may set the number of copies at four.

In a case of using an infrequently used function, a user may remember a menu number for the function on a broad-category basis, but may not remember a precise menu number for the function on a more-detailed basis. For example, a user may remember "4. 2. Magnification", but may not remember a menu number for a magnification of 141%. In a case like this, after pressing "4", "2" and "Set" keys, the user is informed of menu numbers selectable in a tier under the present tier by such means as a display or an audio guidance; and it is more convenient for the user to select a menu number for the function only by inputting a relative position from the present position (i.e., pressing only "3" and "Set" keys) than by pressing "4", "2", "3" and "Set" keys from scratch.

Allowing such a setting by a relative position necessitates a key used for ascending (returning by) one tier, or a key used for returning to the top tier. The key used for ascending one tier is effective upon occasions, such as correcting a setting; thereby, it becomes easy for a user to modify a once-made setting when the user notices a fault in the setting. For example, in a case where a user intends to set a magnification of 141%, but sets "4. 2. 2. 122%" due to a faulty memory, the user can correct the setting only by pressing "3" and "Set" keys after ascending one tier.

Normally, after providing each setting, no further setting is to be provided in the same tier. Accordingly, ascending one tier automatically only when a function setting is provided realizes a still easier operation. For example, in a case where a user intends to set a magnification of 141%, but sets "4. 2. 2. 122%" erroneously, the user can correct the setting only by pressing "3" and "Set" keys without pressing the key used for ascending one tier.

By the way, whereas such a setting made by inputting a relative position realizes easy operations, such a setting requires a user to be aware of the present position. In the present example, only the key used for ascending one tier may be sufficient because of the relatively small number of tiers; however, it is inconvenient to move from a menu of "1. 2. 3. 4. 5. 6" deep down in one series of tiers to a menu of "2. 3. 4. 5. 6. 7" deep down in another series of tiers by using only the key used for ascending one tier. Additionally, if a user is at a loss to find where the present position is in the menu tree, the user becomes unable to judge how to operate. In a case like this, the user can return to the top tier from whatever position by pressing the key used for returning to the top tier, achieving conveniences due to both a setting made by inputting a relative position and a setting made by inputting an absolute position.

The heretofore-descried method for inputting a function setting according to the present embodiment can be applied to a device comprising a touch panel as an operation panel, such as a copying machine or multi-function peripherals, so as to make the device available for a visually handicapped and a wheelchair user who have felt difficulty in operating a conventional touch panel, without adding new hardware.

By operating in synchronization with a touch panel, a visually non-handicapped user can assist a visually handicapped user by using a touch panel, for example, when the visually handicapped user faces a deadlock operational situation.

By informing a user aurally, information concerning a confirmation of a setting, an operational restriction due to a trouble, and so forth can be imparted also to a visually handicapped user.

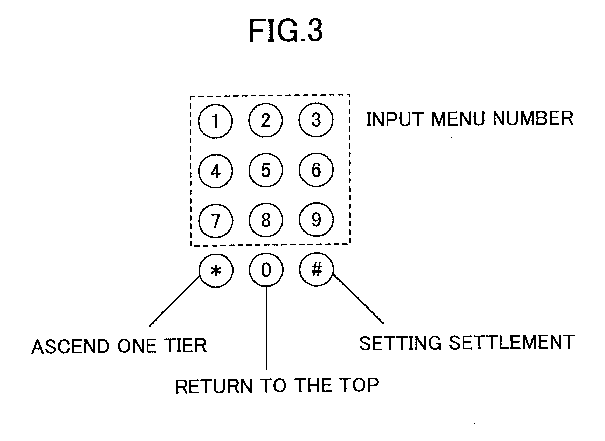

FIG.3 shows an example of allocating keys to a numeric keypad (as setting inputting means) when the function setting inputting method according to the above-described embodiment is realized only by using the numeric keypad.

In the example shown in FIG.3, "1" to "9" keys are allocated as keys used for inputting menu numbers; a "0" key is allocated as a key used for returning to the top of the tree structure; a "#" key is allocated as a key used for settling a setting; and a "*" key is allocated as a key used for ascending one tier in the tree structure.

In an arrangement allowing a setting by inputting a relative position in which a function setting is followed by an automatic ascent by one tier, a user can provide a setting of "10 copies, photographic originals, reduction of 82%, sorting required", for example, by pressing "110#0212#0432#0612#". If the user corrects the setting of reduction to 87% immediately after setting the reduction of 82%, the user may consequently press "110#0212#0432#1#0612#".

Although the description of the present embodiment is based on function settings for a copying machine, the present embodiment according to the present invention is not limited to a copying machine, and can be applied also to an ATM and a ticket-vending machine using a touch panel, for example.

Next, a description will be given of a second embodiment according to the present invention.

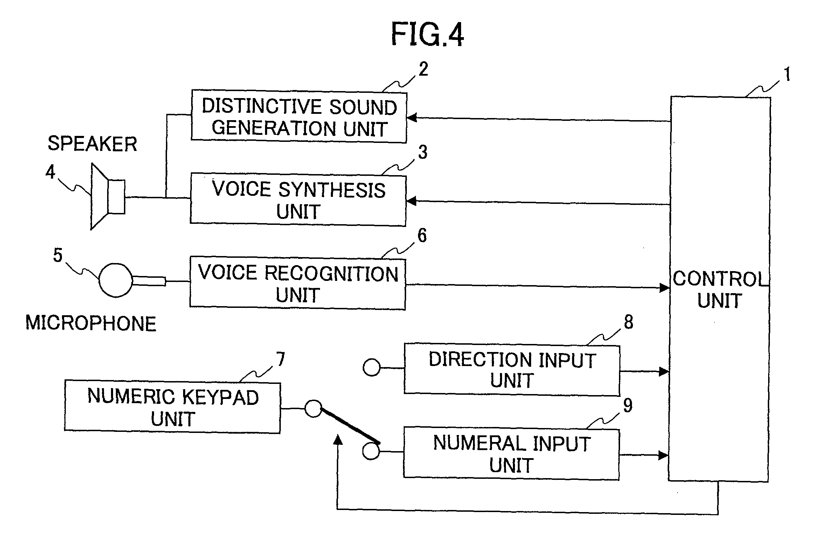

FIG.4 is a diagram illustrating a configuration of a setting operation device of an image forming apparatus according to the second embodiment of the present invention.

The setting operation device of the image forming apparatus comprises a control unit 1, a distinctive sound generation unit 2, a voice synthesis unit 3, a speaker 4, a microphone 5, a voice recognition unit 6, a numeric keypad unit 7, a direction input unit 8, and a numeral input unit 9. The control unit 1 controls the above-mentioned elements of the setting operation device of the image forming apparatus.

The distinctive sound generation unit 2 generates a distinctive sound waveform according to an information item to be imparted to a user supplied from the control unit 1, and drives the speaker 4 so as to inform the user.

The voice synthesis unit 3 receives information to be imparted to a user from the control unit 1, generates a voice waveform, and drives the speaker 4 so as to impart voice information to the user. In this course, any of a voice synthesis by rule, a voice synthesis by edition, and a compressive reproduction can be used as a voice synthesis technology.

The voice recognition unit 6 recognizes a speech of a user input from the microphone 5 when needed, and converts the speech of the user into a character string or a command number so as to supply the character string or the command number into the control unit 1.

An output from the numeric keypad unit 7 is distributed to the direction input unit 8 and the numeral input unit 9 by a control of the control unit 1.

The direction input unit 8 processes press-down information of each of keys of the numeric keypad unit 7 as directional information so as to transmit the directional information to the control unit 1 as information representing a shifting between setting items, a change of set values, a page jump, and so forth.

The numeral input unit 9 transmits press-down information of each of the keys of the numeric keypad unit 7 as numeral information to the control unit 1.

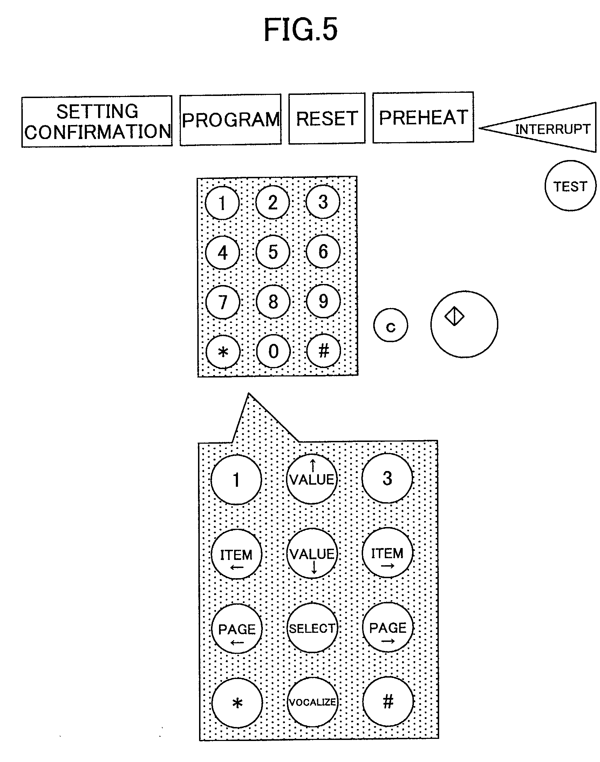

FIG.5 is an illustration of a key allocation for treating press-down information of each of the keys of the numeric keypad unit 7 (an image formation setting providing unit) as directional information. It is noted that the key allocation shown in FIG.5 is merely one example of the present embodiment.

In this example, keys used for shifting between setting items are allocated to keys "4" and "6" arranged horizontally; keys used for changing set values are allocated to keys "2" and "5" arranged vertically; keys used for transferring to other pages are allocated to keys "7" and "9"; a key used for confirming the change of the set value so as to select the confirmed set value is allocated to a key "8"; and a key used for performing a voice recognition is allocated to a key "0". Besides, as another example, the keys used for shifting between setting items may be allocated to the keys "2" and "5" arranged vertically, and the keys used for changing set values may be allocated to the keys "4" and "6" arranged horizontally.

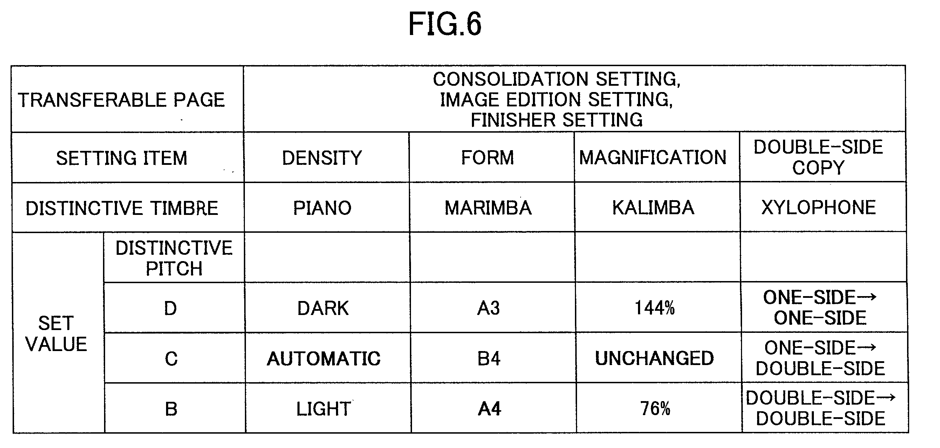

FIG.6 shows an example of one page including an arrangement of setting items and corresponding set values. It is noted that boldface set values are defaults.

With this example, a description will be given of an operation of setting a magnification of 144%. An initial setting item is "density" at the leftmost, and an initial set value is a default of "automatic". The key "6" is pressed so as to shift to a next setting item. The next setting item is "form", and a presently selected set value is a default of "A4". A distinctive timbre for "form" is "marimba", and a distinctive pitch for "A4" is "B". Accordingly, a sound of the timbre "marimba" at the pitch "B" is generated by the distinctive sound generation unit 2 as a distinctive sound, and is output from the speaker 4; and immediately, a name of the setting item and a name of the set value are coupled by the voice synthesis unit 3 so that "Form is A4" is fed back by a synthetic voice. Further, the key "6" is pressed so as to shift to a next setting item. Similarly, for the next setting item "magnification", a distinctive sound of a timbre "kalimba" at a pitch "C" generated by the distinctive sound generation unit 2 is followed by "Magnification unchanged" fed back by a synthetic voice. At this point, the key "2" is pressed so as to check a set value above. The set value above is "144%", and a corresponding distinctive pitch is "D". Accordingly, a distinctive sound of the timbre "kalimba" at the pitch "D" generated by the distinctive sound generation unit 2 is followed by "144%" fed back by a synthetic voice. Since this setting item and this set value compose an. intended setting, the key "8" is pressed at this point so as to select this set value. Thus, the setting intended in the operation in this example is completed.

Besides, as another example, the page shown in FIG.6 may be displayed on a pop-up screen temporarily displayed on a preceding screen, and the above-described setting may be performed for the page displayed on the pop-up screen. In the course of this setting, a background sound may be kept being output from the speaker 4 so as to notice that the setting is being performed for the page displayed on the pop-up screen, with the synthetic voice being superimposed on the background sound.

A setting operation device operable without using vision tends to have a disadvantage that setting items and set values cannot be viewed at a glance. To offset this advantage, a function of shifting, i.e., zapping, the setting items and the set values at high speed in the course of an operation as described above is often provided so as to secure a pseudo view-at-a-glance. To support this function, the present embodiment performs the shifting between the items together with vocalizing the setting items and the set values, and moreover, varying a timbre of a distinctive sound for each setting item, and varying a pitch of a distinctive sound for each set value so as to sensuously express a virtual two-dimensional arrangement of the setting items and the set values.

In the operation in the above-described example, completing the intended setting requires four key-pressing operations of pressing the keys "6", "6", "2" and "8". In the present embodiment, a page, and a setting item and a set value in the page can be specified by voice recognition. Upon utilizing this function, a user presses the key "0", vocalizes "144%", hears a notification of "Magnification 144%" fed back by a synthetic voice feed back unit (the voice synthesis unit 3 and the speaker 4) for confirmation, and presses the key "8" so as to select this set value.

When an intended setting does not exist in the present page, the key "7" or "9" is pressed so as to transfer to other transferable pages. In this example, the transferable pages are "consolidation setting", "image edition setting" and "finisher setting"; accordingly, each time the key "9" is pressed, a synthetic voice for confirming the page name is fed back in this order. On the other hand, each time the key "7" is pressed, a synthetic voice for confirming the page name is fed back in the reverse order.

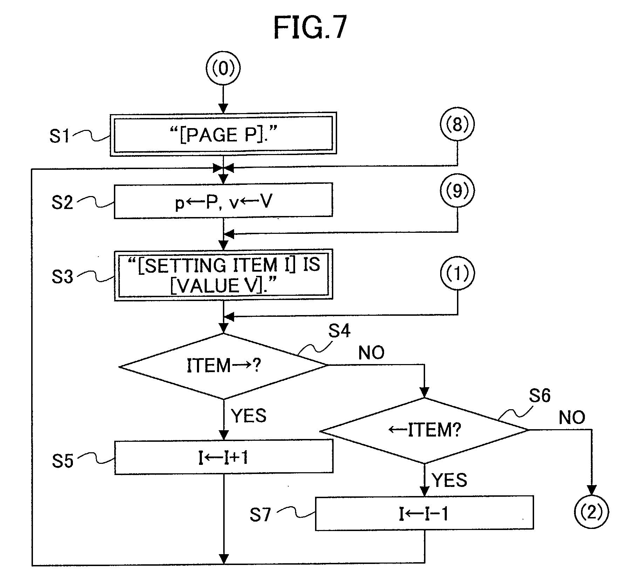

FIG.7 to FIG.11 are flowcharts of processes performed each time a key is pressed so as to perform the above-described operations.

It is noted here that P represents a page in which a setting is currently performed, p represents a page being confirmed as a transfer destination page, I represents a setting item for which a setting is currently provided, V represents a set value currently selected, and v represents a set value being currently confirmed. A double-line rectangle represents a process of feeding back a phrase written in the rectangle by means of a synthetic voice. A rhombus represents a judgment of whether or not a key specified in the rhombus is pressed. A double-line rhombus represents a judgment of whether or not a result of a voice recognition is equal to words specified in the rhombus.

FIG.7 is a flowchart of a series of steps starting from (0) which represents a process, from an initial operation upon transferring to a page, to a shifting between setting items.

Upon transferring to a page, firstly, the present page P is noticed to a user by feeding back "[Page P]." by the synthetic voice feed back unit (step S1).

P is set to p, and V is set to v (step S2).

The present set value V set in the present setting item I is noticed to the user by feeding back "[Setting item I] is [value V]." by the synthetic voice feed back unit (step S3).

When a key used for shifting between setting items in an ascending order is pressed (YES in step S4), I+1 is set to I (step S5), and the process returns to the step S2.

When the key used for shifting between setting items in an ascending order is not pressed (NO in step S4), and when a key used for shifting between setting items in a descending order is pressed (YES in step S6), I-1 is set to I (step S7), and the process returns to the step S2.

When the key used for shifting between setting items in an ascending order is not pressed (NO in step S4), and when the key used for shifting between setting items in a descending order is not pressed either (NO in step S6), a series of steps starting from (2) is performed.

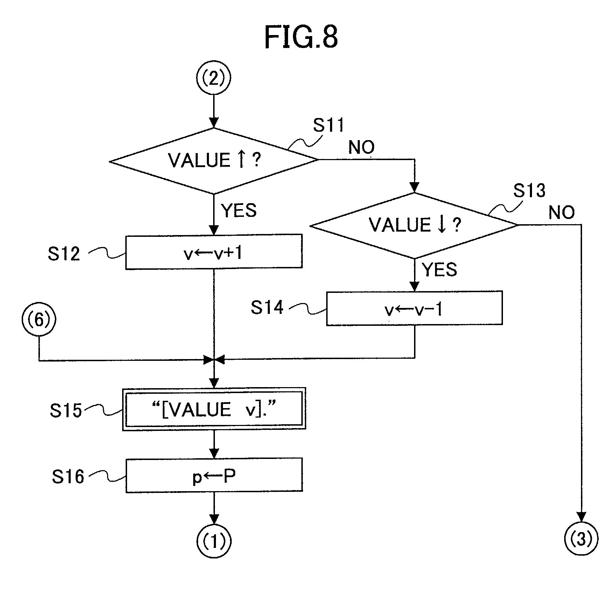

FIG.8 is a flowchart of the series of the steps starting from (2) which represents a process of changing set values.

When a key used for shifting between set values in an ascending order is pressed (YES in step S11), v+1 is set to v (step S12).

When the key used for shifting' between set values in an ascending order is not pressed (NO in step S11), and when a key used for shifting between set values in a descending order is pressed (YES in step S13), v-1 is set to v (step S14).

After the step S12 and the step S14, the set value v being currently confirmed is noticed to the user by feeding back "[Value v]." by the synthetic voice feed back unit (step S15), and P is set to p (step S16).

Thereafter, a series of the steps starting from (1) is performed. I.e., the process returns to the step S4.

Besides, when the key used for shifting between set values in an ascending order is not pressed (NO in step S11), and when the key used for shifting between set values in a descending order is not pressed either (NO in step S13), a series of steps starting from (3) is performed.

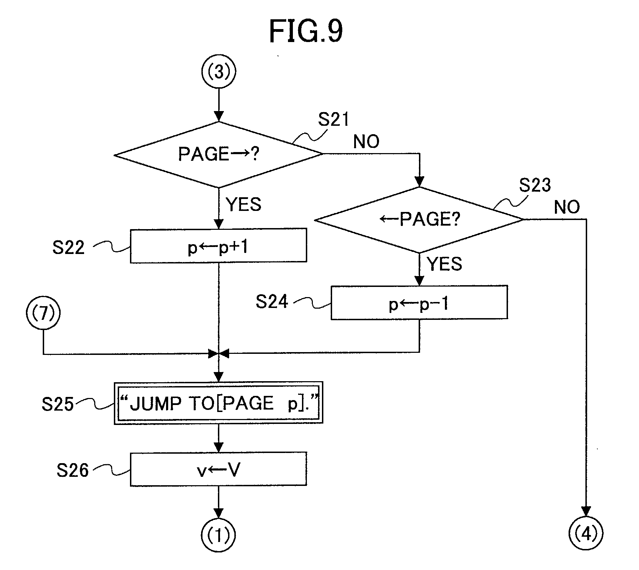

FIG.9 is a flowchart of the series of the steps starting from (3) which represents a process of a page jump.

When a key used for transferring between pages in an ascending order is pressed (YES in step S21), p+1 is set to p (step S22).

When the key used for transferring between pages in an ascending order is not pressed (NO in step S21), and when a key used for transferring between pages in a descending order is pressed (YES in step S23), p-1 is set to p (step S24).

After the step S22 and the step S24, the page p being currently confirmed is noticed to the user by feeding back "Jump to [page p]." by the synthetic voice feed back unit (step S25), and V is set to v (step S26).

Thereafter, the series of the steps starting from (1) is performed. I.e., the process returns to the step S4.

Besides, when the key used for transferring between pages in an ascending order is not pressed (NO in step S21), and when the key used for transferring between pages in a descending order is not pressed either (NO in step S23), a series of steps starting from (4) is performed.

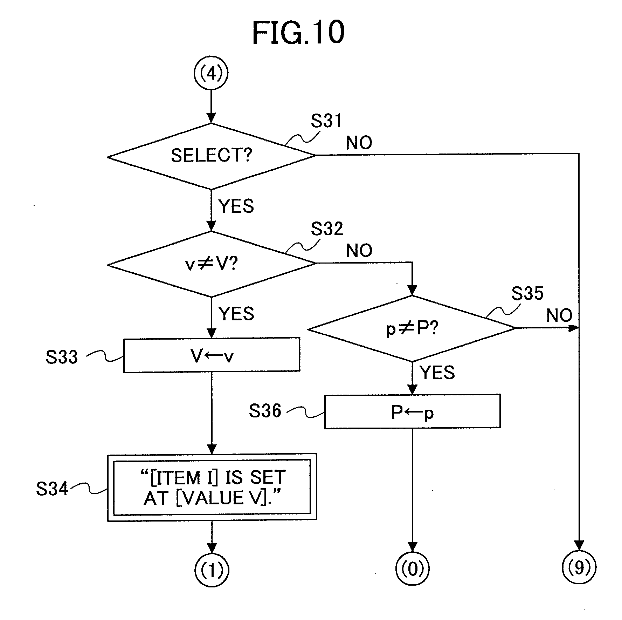

FIG.10 is a flowchart of the series of the steps starting from (4) which represents a process of settling the set value or the transfer destination page.

When a select key is pressed (YES in step S31), it is judged whether V differs from v (step S32).

When V differs from v (YES in step S32), v is set to V (step S33), the present set value V is noticed to the user by feeding back "[Item I] is set at [value V]." by the synthetic voice feed back unit (step S34), and the series of the steps starting from (1) is performed. I.e., the process returns to the step S4.

When V coincides with v (NO in step S32), it is judged whether P differs from p (step S35).

When P differs from p (YES in step S35), p is set to P (step S36), and the series of the steps starting from (0) is performed. I.e., the process returns to the step S1.

Besides, when the select key is not pressed (NO in step S31), or when V coincides with v (NO in step S32), and P coincides with p (NO in step S35), a series of the steps starting from (9) is performed. I.e., the process returns to the step S3.

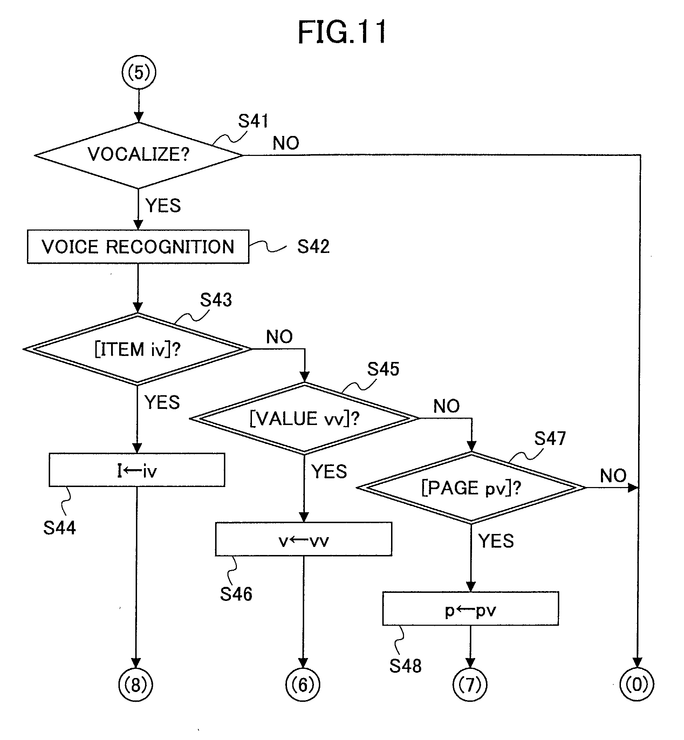

FIG.11 is a flowchart of a series of steps starting from (5) which represents a voice recognition process.

When a vocalize key is pressed (YES in step S41), a voice recognition process is performed (step S42).

When a voice related to a setting item, saying "[Item iv]", is recognized, (YES in step S43), iv is set to I (step S44), and a series of the steps starting from (8) is performed. I.e., the process returns to the step S2.

When a voice related to a setting item is not recognized, (NO in step S43), and when a voice related to a set value, saying "[Value vv]", is recognized, (YES in step S45), vv is set to v (step S46), and a series of the steps starting from (6) is performed. I.e., the process returns to the step S15.

When a voice related to a setting item is not recognized, (NO in step S43), when a voice related to a set value is not recognized, (NO in step S45), and when a voice related to a page, saying "[Page pv]", is recognized, (YES in step S47), pv is set to p (step S48), and a series of the steps starting from (7) is performed. I.e., the process returns to the step S25.

Besides, when the vocalize key is not pressed (NO in step S41), or when a voice related to a setting item is not recognized, (NO in step S43), when a voice related to a set value is not recognized, (NO in step S45), and when a voice related to a page is not recognized, (NO in step S47), the series of the steps starting from (0) is performed. I.e., the process returns to the step S1.

Next, a description will be given of a third embodiment according to the present invention.

The present third embodiment is an example of a device in which an apparatus operation device according to the present invention is incorporated in MFP (Multi-Function Peripherals) (hereinafter referred to as a present device). However, the apparatus operation device according to the present invention can be incorporated not only in the MFP, but also in any device having multiple functions, both of which can provide similar advantages.

### A. Outline of operations by the present device

Hereinbelow, a description will be given of the outline of operations of the present device, by using an "operation upon copying an original document" as an example.

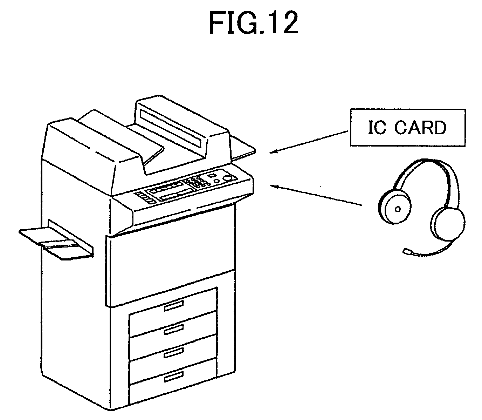

First, the present device judges that a visually handicapped user uses the present device by detecting an insertion of a headset comprising a headphone and a microphone (see FIG.12). Hereinbelow, an "ordinary mode" means an operation mode in which a visually non-handicapped user uses the present device, and an "audio mode" means an operation mode in which a visually handicapped user uses the present device. Additionally, hereinbelow, a visually handicapped user who uses the present device is also referred to simply as a "user".

Besides, the present device may judge that a visually handicapped user uses the present device by recognizing a non-contact IC card used for a personal identification of the visually handicapped user, or a non-contact IC card memorizing information including past operation records. Alternatively, the present device may judge that a visually handicapped user uses the present device by detecting a predetermined key being pressed.

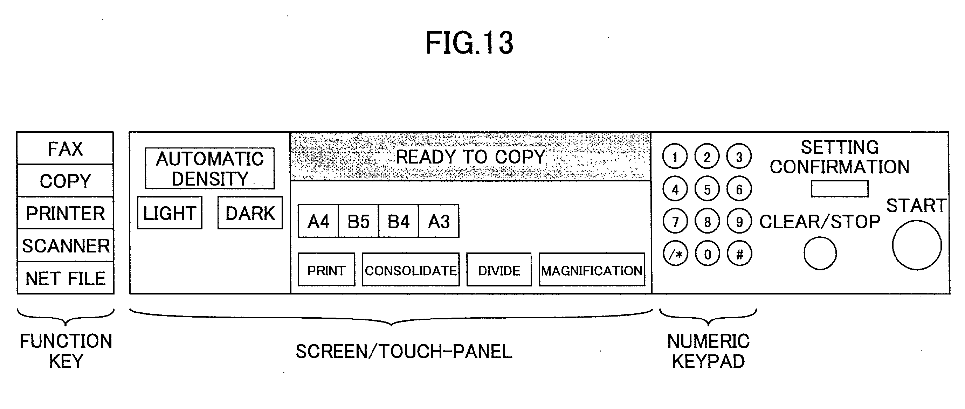

Next, when a "COPY" function key provided in an operation unit of the present device (see FIG.13) is pressed, a user is informed of an announcement speaking "Copying machine is ready to operate" from the headphone.

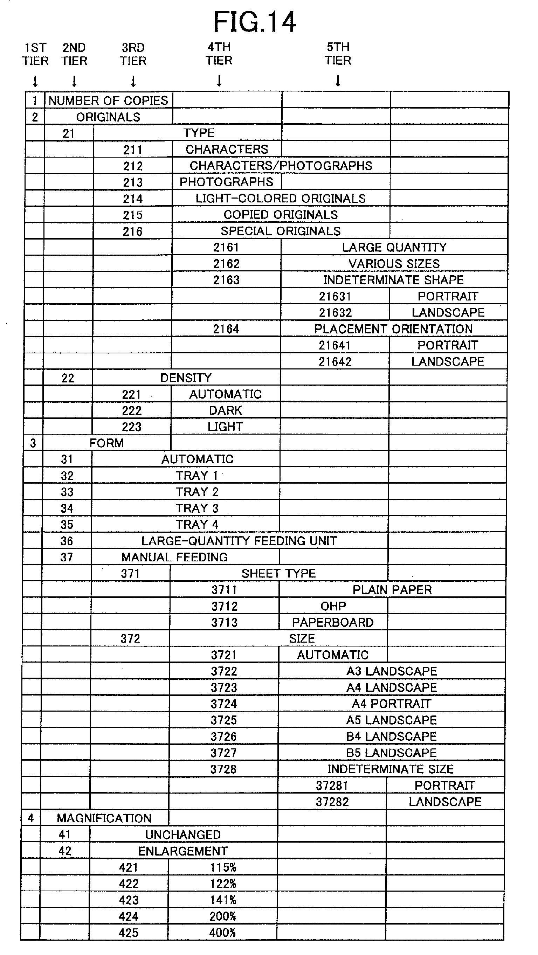

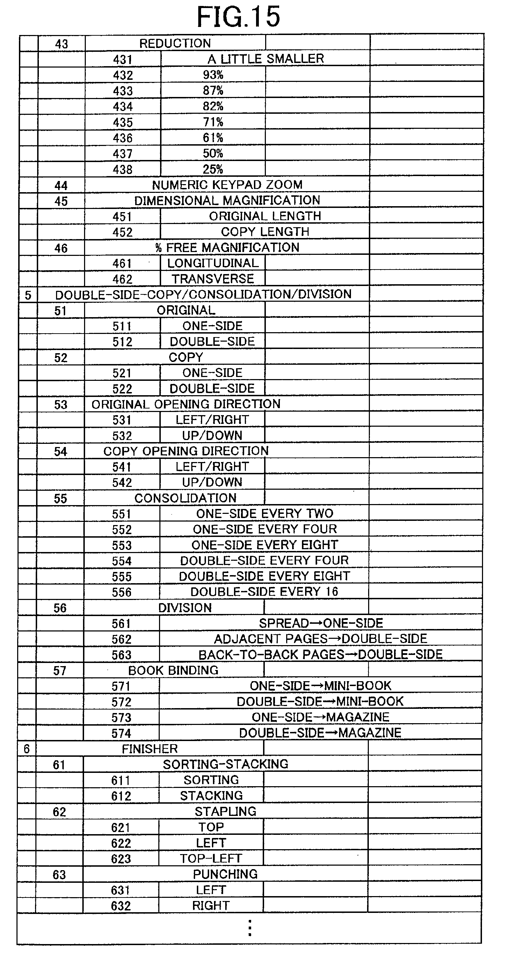

Additionally, the present device includes a single menu having multiple tiers in which all possible operation items are classified beforehand into groups on a function basis for each of peripherals, such as a copying machine (an image forming apparatus) and a facsimile device, and each of the groups is subdivided further. For instance, functions of the present copying machine are classified into tiers as shown in FIG.14 and FIG.15 (illustrating a function classification including only a part of all available functions).

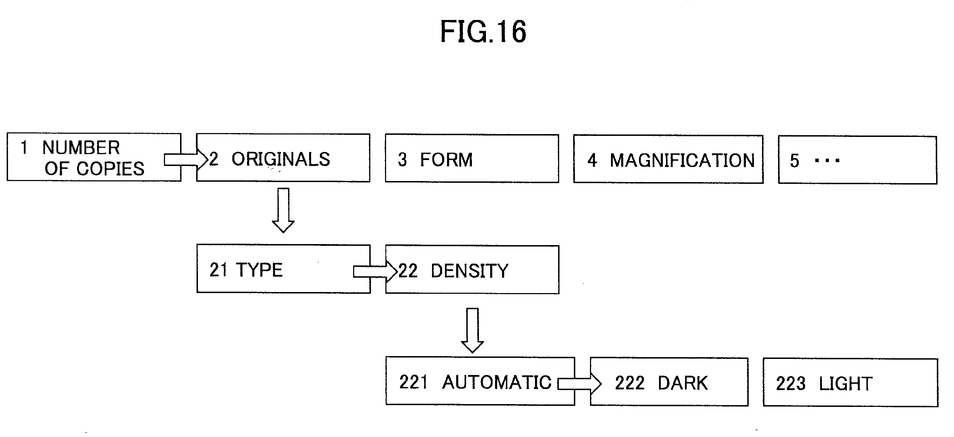

By using directional shifting keys or keys substitutable therefor (hereinafter referred to as directional shifting keys) provided in the operation unit, the user repeats operations of shifting to an intended setting item by following the tiers of the above-described multi-tier menu, as shown in FIG.16, and selecting the setting item; after completing an intended setting, the user presses a start key so as to create a copy of the original document.

In the course of the operations performed in the multi-tier menu by the user, feeding back a functional description of a selected item and a description of settings made thitherto from the present device to the user by means of a voice, a sound and a BGM (Background Music) enables the operations to be performed without looking at a display screen provided in the operation unit of the present device or inputting from a touch panel. In this course, the voice, the sound and the BGM are output by varying tempos of rhythms and fluctuations of intervals according to a type of the setting item, processing status, the depth of a present tier and so forth.

Additionally, the above-described selecting process performed by using the directional shifting keys is associated with a transition of the screen provided in the operation unit, while an inputting operation from the touch panel provided in the operation unit can be performed at the same time; this arrangement enables the operation from the touch panel and the operation from the directional shifting keys to be performed in parallel so that a visually non-handicapped user can assist the user. Besides, when the user has weak eyesight, the user can also use the ordinary mode while operating in the audio mode, which is convenient for the user.

### B. Details of operations by the present device

### (1) Structure of the menu

As mentioned above, a single menu is created, the menu having a tree structure of multiple tiers in which all possible operation items are classified into groups on a function basis for each of peripherals involved in the device according to the present embodiment, such as a copying machine, a facsimile device, a printer device, a scanner device, and a net-file device, and each of the groups is subdivided further.

For instance, when there are further detailed setting items, such as "Magnification" and "Double-side copy", these items, such as "Magnification" and "Double-side copy", are arranged in order as subgroups; under these subgroups, setting items to be selected, such as "Unchanged magnification", "Enlargement", and "Reduction", are arranged; and each of these setting items, such as "Unchanged magnification", "Enlargement", and "Reduction", is further subdivided into final setting items, such as "115%" and "87%".

Followings are types of the items arranged in the multi-tier menu.
- Selection items only one of which can be selected in a same tier
   E.g., "115%" or "122%" under "Enlargement"
- Toggle items each of which toggles so as to turn on or off a function thereof
   E.g., "Sorting" or not under "Finisher"
- Numeral items to each of which a numeral can be set
   E.g., a numeral input by using a numeric keypad after selecting "Number of copies"
- Operative items to start a predetermined operation
   E.g., creation of an address list registered in the facsimile device

For instance, in a case of the copying machine, operation items in a first tier are arranged in the order of "Number of copies", "Originals", "Form", "Magnification", "Double-side copy, Consolidation, Division" and "Finisher", and each of these operation items is further subdivided into setting items in a second tier, a third tier, and so forth.

Additionally, as shown in FIG.14 and FIG.15, predetermined numbers correspond to the setting items in each of the tiers. By specifying the number, the setting item corresponding thereto can be directly selected without following the tiers. Hereinbelow, these numbers are referred to as "function numbers".

### (2) Method for operating the menu

Next, a description will be given of a method for operating the above-described multi-tier menu.

FIG.13 is a view illustrating the operation unit provided in the present device. As shown in FIG.13, the operation unit comprises function keys, the screen, the touch panel, the directional shifting keys or the keys substitutable therefor, the numeric keypad, the start key, a stop key, and a setting confirmation key. The function keys are used for selecting each of functions, such as a copying function, a facsimile function, a printer function, a scanner function, and a net-file function. The screen displays operational status and messages. The touch panel is used for selecting various setting items on the screen. The numeric keypad is used for inputting numerals and so forth.

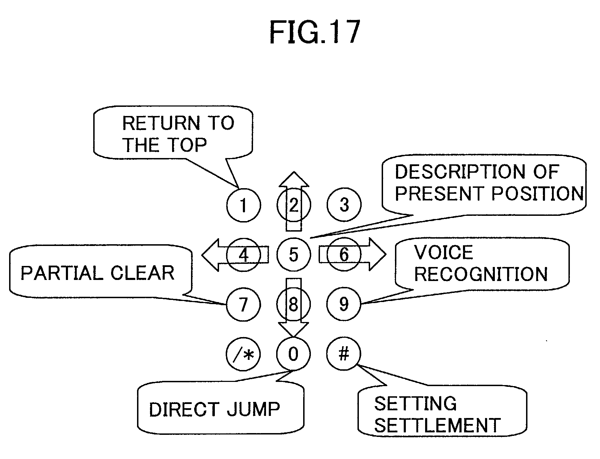

As mentioned above, the directional shifting keys or the keys substitutable therefor are used for the operations of shifting between and selecting from the setting items arranged in the multi-tier menu. In the following description, the numeric keypad is substituted for the directional shifting keys. FIG.17 explains functions allocated to keys of the numeric keypad.

Specifically, a vertical shifting in the tiers is performed by pressing keys arranged vertically in the numeric keypad, and a horizontal shifting to an adjacent item in the same tier is performed by pressing keys arranged horizontally in the numeric keypad.

In FIG.17, a key "2" is pressed so as to follow the tiers upward, and a key "8" is pressed so as to follow the tiers downward; a key "4" is pressed so as to follow the same tier leftward, and a key "6" is pressed so as to follow the same tier rightward. Besides, these functions may be allocated to the above-mentioned keys reversely.

When the user orders a shifting to a lower tier in the multi-tier menu, and the lower tier includes a plurality of setting items, the shifting is made to one of the setting items in the lower tier according to a manner preselected from among the following manners.
- Shift to a first item in the lower tier
   When there are no defaults, for example, when selecting a type of an original document, the shifting is made to a first item in the lower tier.
- Shift to a currently selected item in the lower tier
   For example, when there is an item already provided with a setting in the lower tier, the shifting is made to the already set item in the lower tier so as to resume settings for items subsequent to the already set item, or to correct the setting already provided for the item.
- Shift to a default item in the lower tier
   For example, there are selection items of "Automatic", "Dark" and "Light" for a density setting, and generally, "Automatic" is selected as a default; accordingly, the shifting is made to the default item in the lower tier.

Besides, when the user operates the horizontal shifting keys so as to shift between setting items in the same tier, a shifting beyond a setting item at an end of the tier is made to a setting item at the other end of the tier so as to perform a circulatory shifting. By always shifting in a fixed direction, the user can find an item that the user intends to select. However, the user is likely to be lost in the multi-tier menu, because the user cannot grasp how many setting items the present tier includes.

Alternatively, in place of performing the above-described circulatory shifting, it may be arranged that no shifting be made beyond a setting item at an end of a tier. In this arrangement, when the user fails to select an intended item, the user has to press the shifting keys in a reverse direction. However, the user can grasp how many setting items the present tier includes.

Further, when the user is at a loss to find where the present tier is in the course of a setting, or when the user intends to redo the setting from scratch, a key "1" shown in FIG.17, for example, may be pressed so as to return to a top tier (to "Number of copies" in the first tier, in the example shown in FIG.14) from whichever tier in the multi-tier menu. In this case, setting items selected thitherto are memorized by the present device so that the shifting keys or the confirmation key can be used to shift to these items selected in the unfinished setting.

Additionally, the user can shift directly to a setting item that the user intends to select.

For example, pressing a key "0" enables input of numerals so that the user inputs the function number corresponding to the setting item to which the user intends to shift directly.

For example, when the key "0" is pressed followed by a numeral input of "435" by using the numeric keypad, the present device judges that "Magnification" → "Reduction" → "71%" → is selected (see FIG.14 and FIG.15).

The function number does not have to be of a setting item in the lowermost tier, but may be of a setting item in an intermediate tier.

Additionally, in place of the direct input of the function number corresponding to the setting item after pressing the key "0", the direct shifting to the setting item can be made by pressing a key "9" followed by the user vocalizing the "function number" or a "setting item name" which is recognized by the present device.

Additionally, a partial clear key (allocated to a key "7") can be pressed so as to restore values of setting items in tiers lower than the present tier to default values from which the values have been changed. Upon restoring the set values, an inquiry is made for each of the setting items as to whether or not the set value of the setting item should be restored to the default value so as to restore only the approved set values to the default values. Alternatively, an inquiry may be made as to whether or not the set values of all of the setting items should be restored to the default values from which the set values have been changed.

For instance, when the present tier in the multi-tier menu is at "Finisher", and default values have been changed to values in settings of "Sorting/stacking", "Stapling" and "Punching" in tiers lower than "Finisher", the set values are cleared and restored to the default values.

Further, in order to know setting items selected hitherto by the user, the "setting confirmation" key is pressed so as to shift successively to setting items having values changed from default values by the user, whereby the user can change the set values.

Upon completing a selection of an item to be provided with a setting as described above, or finishing a numeral input to the item as described above, key "#" is pressed so as to settle the selection or the numeral input with regard to the setting item. Thereby, the present device displays information of the settled setting item on the screen provided in the operation unit.

Besides, a procedure of the heretofore-described operations may be memorized with an operation name in an IC card. Accordingly, from the next time on, the same operations can be performed without actually performing those operations, simply by reading the procedure of the operations from the IC card by specifying the operation name.

### (3) Feedback of an operation result to the user by an operational sound, a sound icon and a BGM

In the course of performing the above-described operations of shifting between and selecting from the setting items arranged in the multi-tier menu by using the numeric keypad, the present device informs the user of a confirmation of a result of each of hereinafter-described operations by using an operational sound, a sound icon and a BGM (Background music).

The sound icon is static information representing a property of an object, and specifically, is a motionless sound (a short simple sound) having different timbres for the purpose of discriminating types of setting items.

The operational sound is a sound (a chord, or a considerably short melody) having an identical timbre and different motions for the purpose of helping mental imaging of an operation result, which associates an operation with a meaning of a sound in a musical theory. For instance, a rising sound form and a falling sound form are used for an upward shifting and a downward shifting in the tiers, respectively; a quartal dissonance evoking uneasy feeling is used for a dead end (a failure of a shifting); a dominant motion meaning solution is used for selection and settlement.

Thus, informing the user by the operational sound helping mental imaging of an operation, the sound icon indicating a type of a setting item, and the BGM enables the user to recognize current status so as to reduce uneasiness concerning whether or not information is surely input, or whether or not an operation is completed.

Additionally, preparing the respective operational sounds noticing upward and downward shifts in the tiers, and outputting the operational sounds upon shifting to an upper or lower tier enables the user to be informed of the 'upward or downward shifting in the tiers. Each of these operational sounds is different from the above-described sound icon used for discriminating setting items. Also, the BGM may have a slow rhythm in upper tiers, whereas the BGM may have a faster rhythm in lower tiers, so that the user can recognize where the present tier is in the multi-tier menu.

In this course, an operational sound can be output so as to notice whether or not there is a setting item in a lower tier to which a shifting is intended. Accordingly, the user can be informed that the shifting is impossible. In addition, the user can be informed of how many setting items the lower tier includes by means of an operational sound.

Besides, in a case where the present device is not provided with the setting of the circulatory shifting performed in the same tier, when the user orders a horizontal shifting at a position without any items to which the horizontal shifting can be made, the user is informed of that purport by the operational sound used for a "dead end". Further, the user is informed of a "dead end" in a vertical direction of the tiers also by an operational sound used therefor.

Additionally, upon pressing each of the keys used for selecting a return to the top, a horizontal shifting, a direct shifting, and a voice recognition, etc., an operational sound for confirming the selective operation is output so that the user can recognize that the operation is surely accepted.

Besides, upon performing a numeral input as for inputting a number of copies, a BGM may be output until the numeral input is finished; thereby, the user can confirm that the numeral input is being performed.

Further, the user is informed of conditions of the present device in operation, such as "paper out", "toner shortage", "paper jam", and "front cover opened", by voice. When the voice is stopped before each of these conditions is solved, the user cannot grasp the condition anymore. For example, in a case where a "paper jam" occurs in a copying operation while the user is away from the present device, the above-mentioned voice is not sufficient to inform the user of the "paper jam". However, a BGM may be output following the voice so that the user can recognize the "paper jam" even in this case.

Additionally, when the user specifies 40 as a number of copies, a BGM may be output so that the user can recognize how many copies have been completed. That is, the user is able to know a progress of the copying operation by judging from which part of the BGM the user is hearing.

### (4) Feedback of an operation result to the user by voice

In the course of performing the above-described operations of shifting between and selecting from the setting items arranged in the multi-tier menu by using the numeric keypad, the present device helps the user confirm an operation result by outputting a voice form the headphone of the headset. Thus, informing the user by voice enables the user to recognize whether or not an input and an operation resulting therefrom are surely conducted so as to alleviate uneasy feeling of the user.

Upon shifting to each of the setting items, the present device feeds back a voice announcing a predetermined content for discriminating each of the 'setting items so that the user can recognize which setting item the shifting is made to.

For example, upon shifting to a setting item, such as "Enlargement" or "114%", the name of the item is read out.

Additionally, upon shifting, a voice is output so as to feed back information of whether or not there is a setting item further in a lower tier under a particular tier, or how many setting items the lower tier includes.

When the partial clear key (the key "7") is pressed, setting changes made to setting items in tiers lower than a present position in the multi-tier menu are read out, and inquiries are made as to whether or not changed values of the setting items should be restored to default values.

In this course, in place of making an inquiry for each of the setting items as to whether or not a changed value of a particular setting item should be restored to a default value, one inquiry may be made as to whether changed values of all of the setting items in the lower tiers should be restored to default values; and when the user approves, the changed values of all of the setting items in the lower tiers are restored to the default values at one time.

As to which setting item the user has shifted to by operating the shifting keys, information concerning the setting item' is fed back by means of a voice announcing a predetermined content, by pressing a key "5", for example. The information includes a name and a function number of the setting item, for example. Upon pressing the key "5" after setting the "Form" at A4-landscape, a voice announcing, "Form is set at A4-landscape," is fed back.

Upon completing a selection of a setting item, and performing a settling operation by pressing the key "#", a voice explaining a content of the settled setting is fed back. For example, upon selecting and settling "Enlargement" and "200%", a voice announcing, "Magnification is set at Enlargement of 200%" is fed back.

When the "setting confirmation" key is pressed, setting items having values changed from default values by the user in tiers (including intermediate tiers) lower than a present setting item in the multi-tier menu are read out successively by voice so as to be imparted to the user.

In this course, in place of feeding back all of the setting items by voice at one time, it may be arranged as follows: a voice is fed back for one of the changed setting items by voice; when the setting item includes an error, the error is corrected; the shifting keys are operated so as to shift to a next of the changed setting items; and finally the key "#" is pressed so as to make a final settlement.

Additionally, when the user wants to know all setting items having values changed from default values up to a present point, the user uses the key "0" so as to shift to the top of the multi-tier menu once, and then presses the above-mentioned "setting confirmation" key so as to confirm all of the changed setting items at one time.

When settings are completed for each of setting items, the start key is pressed so as to initiate an operation corresponding to these settings. Upon completion of this operation, a voice announcing a predetermined content informing the user of a result of the operation is fed back.

For example, a result, such as "Copy with magnification of 122% is completed," or "Copy is incomplete due to paper jam," is fed back by voice.

Additionally, status of the present device in operation is imparted to the user, after an operational sound, by a voice of a speaker different from a speaker of the voices used in performing the above-described operations of shifting between and selecting from the setting items. For example, the status of the present device is imparted to the user by a voice announcing, "Paper runs out," "Toner is running short," "Paper is jammed," or "Front cover is opened."

Preparing dials used for varying a pitch, a volume, a rhythm, a tone, and a speed of the above-described fed-back voices enables an output of the voices easily hearable for the user.

Additionally, when a next key operation is performed before the voice feedback finishes, the speed of the fed-back voice is automatically increased so as to alleviate irritation of the user.

Providing the above-described multi-tier menu, and performing a guidance by using a sound and a voice enables the user to become substantially accustomed to operations of the present device through an approximately five-minute practice when the user operates the present device for the first time.

Results of the above-described operations performed by the user are displayed on the screen provided in the operation unit of the present device in synchronization with the sounds or the voices, and an inputting operation can be performed also from the touch panel provided in the operation unit. Accordingly, a visually non-handicapped user can assist the user. Also, a weak-sighted user can operate the present device while looking at the screen.

For example, when the user is at a loss to find how to operate in the course of operating the present device, a visually non-handicapped user can assist the user to select a setting item from the touch panel, followed by a sound icon and a voice output from the headphone so that the user can also be informed of what is selected.

### (5) Example of the operations

Next, a description will be given of an example of an operation of the present device, from setting the "number of copies at 2", to the completion of the operation.

First, when the multi-tier menu is operated so as to shift to the setting item of "Number of copies", a sound icon sounding "(Pillon)" is output from the headphone, followed by a description of the setting item speaking "Number of copies".

At this point, when the user presses the key "#", an audio guidance sounding and speaking "(Kyallan) Please input the number of copies by the numeric keypad and press the key '#'" is output from the headphone, and during the numeral input, a BGM is output from the headphone.

When the user presses the key "2", the user hears the input numeral from the headphone; then, when the user presses the key "#", the user hears a sound and a voice sounding and speaking "(Kyallan) The number of copies is set at 2" from the headphone.

In the above description, the sound sounding "(Kyallan)" indicates an operational sound.

Thereafter, the user presses the start key so as to initiate a copying operation. During the copying operation, a BGM is output from the headphone. Upon completion of this copying operation, the user hears an audio guidance announcing, "Two copies are completed."

### C. Functional configuration of the present device

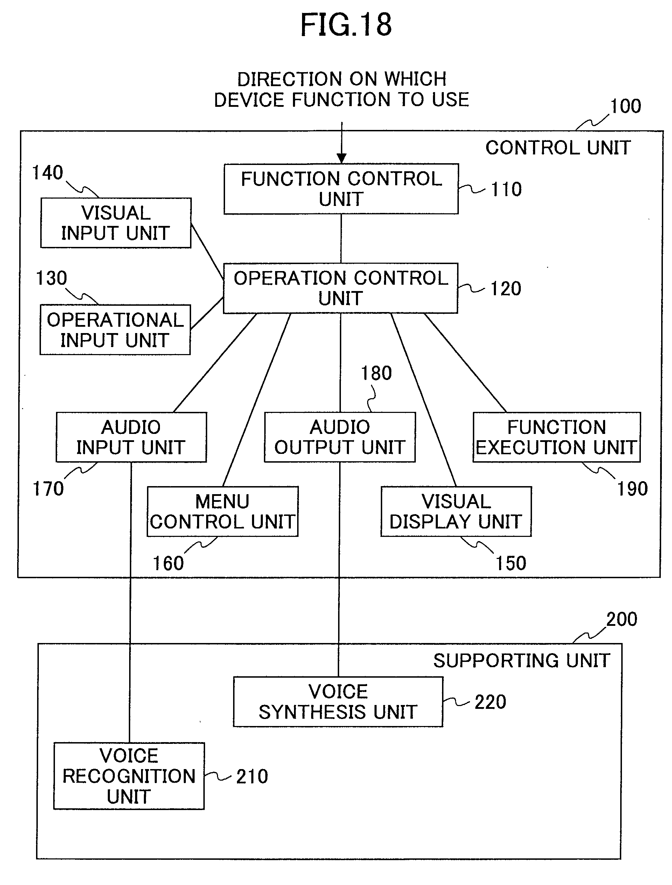

FIG.18 is a functional block diagram of the device according to the third embodiment of the present invention.

The device according to the present third embodiment comprises a control unit 100 and a supporting unit 200. The control unit 100 performs an execution control according to directions from the user. The supporting unit 200 performs a voice recognition and a voice synthesis according to directions from the control unit 100.

The control unit 100 comprises a function control unit 110, an operation control unit 120, an operational input unit 130, a visual input unit 140, a visual display unit 150, a menu control unit 160, an audio input unit 170, an audio output unit 180, and a function execution unit 190.

The function control unit 110 determines which mode to use, the ordinary mode or the audio mode. In addition, according to directions from the user in regard of which device function to use, a copying function, a facsimile function, or other functions, the function control unit 110 performs an initial setting and a total control for an operation corresponding to the specified function.

Normally, the function control unit 110 performs a total control in the ordinary mode. The function control unit 110 performs a total control in the audio mode, when the user inserts the headset comprising the headphone and the microphone, when the user presses a predetermined key, or when the function control unit 110 recognizes the non-contact, IC card used for a personal identification of the visually handicapped user, or the non-contact IC card memorizing information including past operation records, judging that a visually handicapped user uses the present device.

The operation control unit 120 controls various input operations performed by the user, and controls other operations including an operation for displaying a processing result thereof.

The operational input unit 130 inputs numbers, etc., from the numeric keypad. Additionally, in the audio mode, the operational input unit 130 inputs directions, etc., from the numeric keypad functioning as directional shifting keys used for shifting in the tree structure of the multi-tier menu, or functioning as various execution keys used for performing operations such as selecting and settling a setting item.

The visual input unit 140 performs an input for selecting various setting items displayed on the screen, by using the touch panel provided on the screen, in the ordinary mode. In the audio mode, the visual input unit 140 is used for a visually non-handicapped user to assist the user to select an item, or is used for a weak-sighted user to select a setting.

The visual display unit 150 displays various functions on the screen, in the ordinary mode. In the audio mode, the visual display unit 150 displays setting items selected and settled from the multi-tier menu by the user, on the screen.

In a multi-tier menu corresponding to the device function specified by the user, the user selects and settles a setting item by using the numeric keypad or by means of voice recognition. In this course, the menu control unit 160 manages a present position in the multi-tier menu operated by using the numeric keypad or by means of voice recognition.

In the audio mode, the audio input unit 170 transfers to the menu control unit 160 a result of a voice recognition performed with respect to a name or a function number of a setting item input by the user. Thereby, the user can directly shift to the intended setting item in the multi-tier menu.

In the audio mode, the audio output unit 180 outputs an operational sound, an audio guidance, a BGM, etc., representing results of various operations performed by using the numeric keypad, and below-mentioned function executions, according to directions from the menu control unit 160 and the operation control unit 120.

After various setting items are selected, the function execution unit 190 executes a function (e.g., a copying function, a facsimile transmission/reception) with those settings.

The supporting unit 200 comprises a voice recognition unit 210 and a voice synthesis unit 220.

The voice recognition unit 210 is called by the audio input unit 170, and performs a voice recognition with respect to a voice (announcing a setting item name in the multi-tier menu, a function number, or an operative direction) vocalized by the user, by using a voice recognition dictionary corresponding to a device function operated by the user at present (e.g., a dictionary for the copying machine function). The voice recognition unit 210 returns a result of the voice recognition to the audio input unit 170.

The voice synthesis unit 220 is called by the audio output unit 180. Upon feeding back a voice to the user, the voice synthesis unit 220 synthesizes a voice from texts by using a voice synthesis dictionary, and returns the synthetic voice to the audio output unit 180.

At this point, the audio output unit 180 may feed back a voice recorded beforehand, in place of feeding back the voice synthesized from texts by the voice synthesis unit 220.

Hereinbelow, a description will be given of operations of the device according to the present third embodiment, by using an "operation upon copying an original document" as an example.

First, when the user inserts the headset comprising the headphone and the microphone, the function control unit 110 judges that a visually handicapped user uses the present device so as to transit to the audio mode.

Besides, the function control unit 110 may judge that a visually handicapped user uses the present device by recognizing the non-contact IC card used for a personal identification of the visually handicapped user, or the non-contact IC card memorizing information including past operation records. Alternatively, the function control unit 110 may judge that a visually handicapped user uses the present device by detecting the user pressing a predetermined key.

Next, when the user selects each of the functions, such as a copying function, a facsimile function, a printer function, a scanner function, and a net-file function by pressing the corresponding function key, the function control unit 110 determines the device function used by the user, and retrieves and initializes the multi-tier menu corresponding to the device function.

The user uses the directional shifting keys and the numeric keypad so as to shift vertically in the tiers, or shift horizontally to adjacent items in the same tier. The user performs the above-mentioned input from the directional shifting keys and the numeric keypad in the operational input unit 130. The operation control unit 120 transfers the input key information (e.g., code representing directions input from the directional shifting keys, or a numeric value marked on each of the keys in the numeric keypad) to the menu control unit 160 so as to manage a present position in the multi-tier menu.

Additionally, when the above-mentioned key information is input, the operation control unit 120 calls the audio output unit 180, and causes the audio output unit 180 to output an operational sound, a sound icon, a voice announcing a name of a setting item to which the user has shifted by using the directional shifting keys, and a BGM corresponding to the setting item. The above-mentioned voice is the voice synthesized by the voice synthesis unit 220 from texts of the name of the setting item.

When the user orders a shifting to a lower tier in the multi-tier menu, the menu control unit 160 manages a present position in the multi-tier menu so that the shifting is made to one of the setting items in the lower tier according to a manner preselected from among the following manners, in a case where the lower tier includes a plurality of setting items.
- Shift to a first item in the lower tier
- Shift to a currently selected item in the lower tier
- Shift to a default item in the lower tier

Upon shifting, the menu control unit 160 calls the audio output unit 180 so as to output an operational sound, a BGM, and a voice announcing a name of the setting item for the purpose of informing the user that the shifting order is surely executed.

Additionally, when the user operates the horizontal shifting keys so as to shift between setting items in the same tier, the menu control unit 160 manages a present position in the multi-tier menu so that a shifting beyond a setting item at an end of the tier is made to a setting item at the other end of the tier.

Alternatively, in place of performing this circulatory shifting, the menu control unit 160 manages a present position in the multi-tier menu so that no shifting is made beyond a setting item at an end of a tier, because there is no setting item beyond. In this case, the menu control unit 160 calls the audio output unit 180 so as to output an operational sound used for informing a "dead end" which informs the user of the "dead end" situation. Also when the "dead end" situation occurs in a vertical direction in the multi-tier menu, the menu control unit 160 calls the audio output unit 180 so as to output an operational sound used for informing a "dead end" which informs the user of the "dead end" situation.

When Further, when the user orders a shifting returning to the top tier by pressing the key "1", the menu control unit 160 memorizes setting items selected thitherto, and manages a present position in the multi-tier menu so that a first setting item in the uppermost tier becomes the present position. In the course of this shifting, the menu control unit 160 calls the audio output unit 180 so as to output a sound icon and a voice announcing a name of the setting item to which the shifting has made; thereby, the user is informed that the shifting is surely conducted.

When the user presses the key "0" so as to order a direct shifting to a setting item which the user intends to set, the menu control unit 160 calls the audio output unit 180 so as to output an operational sound, a voice announcing, "Please input Function Number", and a BGM.

While this BGM is output, the user inputs numbers from the numeric keypad, and the input numbers are read out via the audio output unit 180. Finally, when the user presses the key "#", the menu control unit 160 causes the audio output unit 180 to stop the BGM and to output an operational sound and a voice announcing a name of a setting item corresponding to the input function number, and manages the setting item to be a present position in the multi-tier.

For example, when the user presses the key "0", and subsequently inputs "435" by using the numeric keypad, a voice announcing, "Magnification is set at Reduction of 71%" is fed back.

When the user presses the key "5" so as to request information as to which setting item the user has shifted to at present, the menu control unit 160 calls the audio output unit 180 so as to notify the user of a sound icon and voices announcing information including a name of a setting item and a function number.

Additionally, when the user presses the key "9", the menu control unit 160 calls the audio output unit 180 so as to output an operational sound and a voice announcing, "Please vocalize Setting Item Name or Function Number". Subsequently, the menu control unit 160 calls the audio input unit 170, causes the user to vocalize a setting item name or a function number, and manages so that a present position comes at a setting item corresponding to a result recognized from the voice of the user by the voice recognition unit 210.

Upon completion of this vocal input, the menu control unit 160 calls the audio output unit 180 so as to output a sound icon and a voice announcing the name of the setting item corresponding to the vocal input. Thereby, the user is informed that the vocal input is recognized correctly.

When the user presses the key "#" so as to order a settlement of a selection of a setting item, the menu control unit 160 calls the audio output unit 180 so as to output an operational sound and a voice announcing a content of the settled setting operation to the user. Also, the menu control unit 160 calls the visual display unit 150 so as to display this settled content on the screen provided in the operation unit.

When the user presses the partial clear key so as to order a restoration of values of setting items at a present position and in tiers lower than the present position in the multi-tier menu to default values, the menu control unit 160 calls the audio output unit 180 so as to inform the user of an operational sound and a voice announcing a content of the order (a message saying "setting items at a present position and in tiers lower than the present position in the multi-tier menu are cleared").

Subsequently, the menu control unit 160 searches the setting items at the present position and in the tiers lower than the present position in the multi-tier menu; when the values of the setting items have been changed from the default values, the values of the setting items are read out, and inquiries are made to the user as to whether or not the changed values of the setting items should be restored to the default values.

When the user orders that the changed values of the setting items be restored to the default values (for example by pressing the settlement key), the values of the setting items are restored to the default values.

Thereafter, the menu control unit 160 calls the audio output unit 180 so as to output a sound icon and an audio message announcing a completion of the operation; thereby, the user is informed that the partial clear is completed.

Alternatively, in this course, in place of making the above-mentioned individual inquiries, one audio inquiry may be made as to whether or not all of the changed values of the setting items should be restored to the default values at one time.

Further, when the user presses the "setting confirmation key" so as to know setting items selected thitherto, the menu control unit 160 shifts the position successively to setting items having values changed from default values by the user, and calls the audio output unit 180 so as to read out contents of the setting items; thereby, the user is informed of the contents of the setting items having the changed values. In the course of successively shifting to the setting items having the changed values, the menu control unit 160 manages each of the setting items as a present position so that the user can correct the setting item when the setting item includes an error.

Besides, the function control unit 110 monitors status of the present device in operation; in a case, such as "paper out", "toner shortage", "paper jam", or "front cover opened", the menu control unit 160 calls the audio output unit 180 so as to output a sound icon followed by a BGM and a voice announcing, "Paper runs out," "Toner is running short," "Paper is jammed," or "Front cover is opened." Thereby, the user is informed of the status of the present device.

Upon completion of providing settings for the setting items, when the user presses the start key, the operation control unit 120 calls the function execution unit 190, and causes the function execution unit 190 to execute a device function selected initially by the user, for example. For example, when the device function is of a copying machine, a copying operation corresponding to the settings is performed. Upon completion of this operation, the operation control unit 120 calls the audio output unit 180 so as to inform the user of a result of the operation by voice.

For example, a result, such as "Copy with magnification of 122% is completed," or "Copy is incomplete due to paper jam," is fed back by voice.

Additionally, when the user specifies 40 as a number of copies, for example, the operation control unit 120 causes the audio output unit 180 to output a BGM so that the user can recognize how many copies have been completed. That is, the user is able to know a progress of the copying operation by judging from which part of the BGM the user is hearing.

### D. Other device configurations (other applications)

In the foregoing third embodiment, the apparatus operation device (the control unit 100 and the supporting unit 200) according to the present invention is incorporated in the MFP.

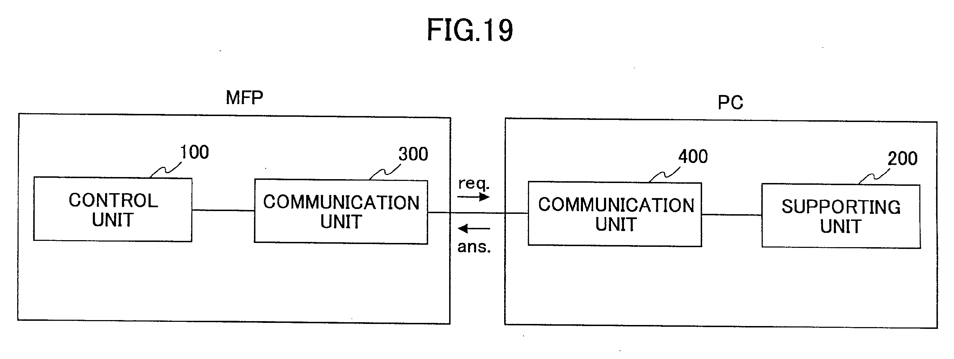

In a fourth embodiment according to the present invention, the control unit 100 of the apparatus operation device may be incorporated in an apparatus, such as MFP, a facsimile device, a printer device, or a scanner device, and the supporting unit 200 may be incorporated in a general purpose computer (hereinafter referred to as a PC), as shown in FIG.19.

In the present fourth embodiment, a communication unit 300 connected with the control unit 100 is connected with a communication unit 400 connected with the supporting unit 200, by a cable or a communication line (including a network), so that the control unit 100 and the supporting unit 200 intercommunicate.

In the above-described configuration, when the control unit 100 controls an execution of a voice recognition, the control unit 100 transmits key information requesting the voice recognition, and audio data, via the communication unit 300 to the communication unit 400, the audio data being input from the audio input unit 170. The communication unit 400 calls the voice recognition unit 210 according to the key information, and returns a result of the voice recognition together with the key information to the communication unit 300. The communication unit 300 judges the received data to be the result of the voice recognition according to the key information, and returns the received data to the audio input unit 170 of the control unit 100.

On the other hand, when the control unit 100 controls an execution of a voice synthesis, the control unit 100 transmits key information requesting the voice synthesis, and texts, via the communication unit 300 to the communication unit 400, the texts being prepared in the audio output unit 180. The communication unit 400 calls the voice synthesis unit 220 according to the key information, and returns a result of the voice synthesis together with the key information to the communication unit 300. The communication unit 300 judges the received data to be the result of the voice synthesis according to the key information, and returns the received data to the audio output unit 180 of the control unit 100.

As to obtaining output audio data, in place of synthesizing a voice from the texts, it may be arranged that audio data recorded beforehand be selected according to key information specifying an item of audio data.

As described above, by dividing functions between the apparatus, such as the MFP, and the PC, each apparatus, such as the MFP, does not have to bear immense dictionary information or have time-consuming functions of the voice recognition and the voice synthesis, as does the supporting unit 200. Additionally, dictionaries and processing systems provided in the supporting unit 200, and the PC per se, become more maintainable with ease.

In the above-described configuration, a favorable cost balance is achieved by connecting a plurality of sets of MFP with one PC.

### E. Embodiment as a program

The object of the present invention can be achieved also as follows. Each of the functions composing the foregoing third and forth embodiments is prepared in the form of programs. The programs are written to a recording medium, such as a CD-ROM, beforehand. This CD-ROM is mounted on a computer comprising a medium drive, such as a CD-ROM drive, so that the programs are stored in a memory or a storage unit of the computer, whereby the programs are executed.

In this case, the programs per se, which are read from the recording medium, realize the functions of the foregoing third and forth embodiments. Thus, the programs, and the recording medium on which the programs are recorded, constitute the present invention.

Besides, either of the following mediums can be used as the recording medium: a semiconductor medium (e.g., a ROM, a nonvolatile memory card), an optical medium (e.g., a DVD, an MO, an MD, a CD-R), or a magnetic medium (e.g., a magnetic tape, a flexible disk).

The functions of the foregoing third and forth embodiments are realized not only by executing the loaded programs, but also by a part or all of actual processes performed by an operating system, etc., according to instructions of the programs.

Additionally, the functions of the foregoing third and forth embodiments are realized also by a part or all of actual processes performed by a CPU, etc., provided in a functional-extension board or a functional-extension unit, based on instructions of the programs realizing the functions of the foregoing third and forth embodiments, the programs being loaded on a memory provided in the functional-extension board or the functional-extension unit.

Further, in a case where the above-mentioned programs are stored in a storage unit, such as a magnetic disk, of a server computer, and the programs are distributed by such means as downloading to a user computer connected to the server computer by a communication network, the storage unit of the server computer also forms the recording medium of the present invention.

The present invention is not limited to the specifically disclosed embodiments, and variations and modifications may be made without departing from the scope of the present invention.

The present application is based on Japanese priority applications No. 2001-206552 filed on July 6, 2001, No. 2001-213111 filed on July 13, 2001, No. 2001-254753 filed on August 24, 2001, and No. 2001-272955 filed on September 10, 2001, the entire contents of which are hereby incorporated by reference.

## Claims

1. A function setting inputting method for setting a function and a setting item in a device having a plurality of functions and setting items ("1."-"6."), **characterized by**:
the step of selecting from a menu having a tree structure by specifying a position in said tree structure so as to set said function and said setting item, the tree structure classifying said functions and said setting items.

2. The function setting inputting method as claimed in claim 1, wherein said device comprises a numeric keypad, and a number of options in each tier of said tree structure is equal to or smaller than 10.

3. The function setting inputting method as claimed in claim 1 or 2, wherein said step of selecting selects from said menu by using a relative position in said tree structure.

4. The function setting inputting method as claimed in claim 1, 2 or 3, wherein said device comprises a key (*) used for ascending one tier in said menu.

5. The function setting inputting method as claimed in claim 1, 2, 3 or 4, further comprising the step of ascending one tier in said menu automatically after setting said function and said setting item.

6. The function setting inputting method as claimed in any one of the preceding claims wherein said device comprises a key ("0") used for returning to a top of said menu.

7. A function setting inputting device having a plurality of functions and setting items ("1."-"6."), and setting a function and a setting item therefrom,
**characterized by** comprising:
a menu having a tree structure classifying said functions and said setting items; and
setting inputting means ("0"-"9", "*", "#") for selecting from said menu by specifying a position in said tree structure so as to set said function and said setting item.

8. The function setting inputting device as claimed in claim 7, further comprising a plurality of said setting inputting means, wherein one of said setting inputting means includes a touch panel.

9. The function setting inputting device as claimed in claim 8, wherein that display screens of the plurality of said setting inputting means operate in synchronization.

10. The function setting inputting device as claimed in claim 7, 8 or 9, further comprising means for informing a user aurally in synchronization with an operation of said setting inputting means.

11. A setting operation device used for providing a setting for an image formation performed by an image forming apparatus,
**characterized by** comprising:
an image formation setting providing unit (7) used for providing the setting for the image formation by operating a numeric keypad; and
a synthetic voice feed back unit (3, 4) outputting a status of said setting by a synthetic voice noticing said status of said setting,
wherein a shifting between setting items and a change of set values are performed without using vision.

12. The setting operation device as claimed in claim 11, wherein said image forming apparatus comprises a visual display device, and the setting items displayed on said visual display device at one time are grouped into one page so that each of said shifting between the setting items and said change of the set values is performed divisionally according to a setting scene corresponding to said page, the setting scene transiting to another setting scene in accordance with a screen transition of said visual display device.

13. The setting operation device as claimed in claim 11 or 12, wherein said shifting between the setting items is performed by pressing keys ("4", "6") arranged horizontally in said numeric keypad, and said change of the set values is performed by pressing keys ("2", "5") arranged vertically in said numeric keypad.

14. The setting operation device as claimed in claim 11 or 12, wherein said shifting between the setting items is performed by pressing keys ("2", "5") arranged vertically in said numeric keypad, and said change of the set values is performed by pressing keys ("4", "6") arranged horizontally in said numeric keypad.

15. The setting operation device as claimed in any one of claims 11 to 14, wherein a name of the setting item and a name of the set value currently selected for said setting item are noticed by the synthetic voice output by said synthetic voice feed back unit (3, 4) upon performing said shifting between the setting items.

16. The setting operation device as claimed in claim 15, wherein a short distinctive sound is added immediately before said name of said setting item and said name of said set value currently selected for said setting item are noticed by said synthetic voice feed back unit (3, 4).

17. The setting operation device as claimed in claim 16, wherein said distinctive sound has a timbre for said setting item and a group of the set values selectable for said setting item, the timbre being different from timbres for all other setting items.

18. The setting operation device as claimed in claim 16, wherein said distinctive sound has a timbre for said setting item and a group of the set values selectable for said setting item, the timbre being different from timbres for all other setting items in said setting scene.

19. The setting operation device as claimed in claim 16, wherein said distinctive sound has different timbres at least between the adjacent setting items.

20. The setting operation device as claimed in one of claims 16 to 19, wherein said distinctive sound has a different pitch for each of the set values selectable for said setting item.

21. The setting operation device as claimed in claim 20, wherein said distinctive sound has pitches corresponding to an arrangement order of said set values.

22. The setting operation device as claimed in any one of claims 12 to 21, wherein a name of the setting item and a name of the set value located in said page are provided with a setting, and a name of a page to which said page can transit, can be input by voice recognition.

23. The setting operation device as claimed in any one of claims 12 to 22, wherein a background sound is output continuously so as to give notice that a setting is being provided for a page corresponding to a pop-up screen temporarily displayed on a preceding screen, and said synthetic voice feed back unit (3, 4) outputs the synthetic voice so that said synthetic voice is superimposed on said background sound.

24. An apparatus operation device used by a user to operate an apparatus,
**characterized by** comprising:
a function control unit (110) causing an operation of said apparatus to transit to an audio mode when the user is judged to be a visually handicapped user; and
an operation control unit (120) controlling operations performed by the user in said audio mode,
wherein said operation control unit (120) controls a menu control unit (160), an operational input unit (130), and an audio output unit (180) so as to cause the visually handicapped user to operate said apparatus without using vision, the menu control unit (160) arranging operation items of said apparatus as a multi-tier menu containing multiple tiers of setting items and function numbers corresponding thereto so as to manage a shifting to an intended setting item in said multi-tier menu and a selection status of the setting item, the operational input unit (130) used by the user for inputting one of operations of shifting to the setting item and selecting the setting item in said multi-tier menu, and the audio output unit (180) informing the user of a result of the operation by outputting a sound and a voice according to one of said operations of shifting to the setting item and selecting the setting item in said multi-tier menu performed by the user.

25. The apparatus operation device as claimed in claim 24, wherein said audio output unit (180) outputs a sound according to a type of said setting item.

26. The apparatus operation device as claimed in claim 24 or 25, wherein said audio output unit (180) outputs different sounds for an upward shifting and a downward shifting in said tiers.

27. The apparatus operation device as claimed in any one of claims 24 to 26, wherein the sound output by said audio output unit (180) is one of an operational sound, a sound icon and a BGM.

28. The apparatus operation device as claimed in any one of claims 24 to 27, wherein the sound and the voice output by said audio output unit (180) are variable in pitch, speed, rhythm, tone, and volume.

29. The apparatus operation device as claimed in any one of claims 24 to 28, wherein one of a directional shifting key and a key substitutable therefor is used in said operational input unit (130).

30. The apparatus operation device as claimed in any one of claims 24 to 29, wherein said menu control unit (160) causes said audio output unit (180) to inform the user of information of each of the setting items by outputting a voice when the user performs an operation of confirming the setting item.

31. The apparatus operation device as claimed in any one of claims 24 to 30, wherein said menu control unit (160) performs a successive shifting to the setting items having contents changed from default contents by the user, and causes said audio output unit (180) to inform the user of the changed contents of the setting items by outputting a voice, when the user performs an operation of confirming the setting items all at one time.

32. The apparatus operation device as claimed in any one of claims 24 to 31, wherein said menu control unit (160) causes said audio output unit (180) to make an inquiry by outputting a voice to the user as to whether or not a content of each of the setting items be restored to default contents, the setting items being located in the tiers at and below a present operational position in said multi-tier menu, when the user performs an operation of restoring the contents of said setting items to the default contents.

33. The apparatus operation device as claimed in any one of claims 24 to 31, wherein said menu control unit (160) causes said audio output unit (180) to make an inquiry by outputting a voice to the user as to whether or not contents of all of the setting items be restored to default contents, the setting items being located in the tiers at and below a present operational position in said multi-tier menu, when the user performs an operation of restoring the contents of said setting items to the default contents.

34. The apparatus operation device as claimed in any one of claims 24 to 33, wherein further comprising an audio input unit (170) used for inputting a voice of the user, the voice being recognized by a voice recognition, wherein said menu control unit (160) performs a direct shifting to the setting item specified by said voice.

35. The apparatus operation device as claimed in claim 34, wherein the voice of the user input by using said audio input unit (170) represents one of a name of the setting item and a function number corresponding to the setting item.

36. The apparatus operation device as claimed in any one of claims 24 to 35, further comprising a visual display unit (150) displaying a setting status of each of the setting items, wherein said menu control unit (160) causes said audio output unit (180) to inform the user of a content of the operation of selecting the setting item by outputting a voice, and causes said visual display unit (150) to display the content of said operation of selecting, when the user settles said operation of selecting.

37. The apparatus operation device as claimed in claim 36, further comprising a visual input unit (140) used for inputting the setting item selected from the setting items having the setting status thereof displayed by said visual display unit (150), wherein said menu control unit (160) causes said audio output unit (180) to inform the user of the setting status of the setting item input by using said visual input unit (140) so as to cause both a visually non-handicapped user and the visually handicapped user to operate said apparatus.

38. The apparatus operation device as claimed in any one of claims 24 to 37, wherein said operation control unit (120) causes said audio output unit (180) to inform the user of a result the operation of said apparatus by outputting a sound and a voice during said operation of said apparatus in progress.

39. The apparatus operation device as claimed in any of claims 24 to 37, wherein said operation control unit (120) causes said audio output unit (180) to inform the user of a result the operation of said apparatus by outputting a sound and a voice upon completion of said operation of said apparatus.

40. The apparatus operation device as claimed in any one of claims 24 to 37, wherein said operation control unit (120) causes said audio output unit (180) to inform the user of a result the operation of said apparatus by outputting a sound and a voice during said operation of said apparatus in progress and upon completion of said operation of said apparatus.

41. A method for causing a computer to function as an apparatus operation device used by a visually handicapped user to operate an apparatus without using vision, **characterized by** the steps of:
causing an operation of said apparatus to transit to an audio mode when the user is judged to be a visually handicapped user;
controlling operations performed by the user in said audio mode;
inputting one of operations of shifting to an intended setting item in a multi-tier menu and selecting the setting item, the multi-tier menu containing operation items of said apparatus arranged as multiple tiers of setting items and function numbers corresponding thereto;
managing the shifting to the setting item in said multi-tier menu and a selection status of the setting item; and
informing the user of a result of the operation by outputting a sound and a voice according to one of said operations of shifting to the setting item and selecting the setting item in said multi-tier menu performed by the user.

42. A computer readable recording medium storing program code for causing a computer to function as an apparatus operation device used by a visually handicapped user to operate an apparatus without using vision,
**characterized by** comprising:
program code means for causing an operation of said apparatus to transit to an audio mode when the user is judged to be a visually handicapped user;
program code means for controlling operations performed by the user in said audio mode;
program code means for inputting one of operations of shifting to an intended setting item in a multi-tier menu and selecting the setting item, the multi-tier menu containing operation items of said apparatus arranged as multiple tiers of setting items and function numbers corresponding thereto;
program code means for managing the shifting to the setting item in said multi-tier menu and a selection status of the setting item; and
program code means for informing the user of a result of the operation by outputting a sound and a voice according to one of said operations of shifting to the setting item and selecting the setting item in said multi-tier menu performed by the user.

43. An image forming apparatus performing an image formation by using setting items selected and settled with respect to functions of said image forming apparatus,
**characterized by** comprising:
an apparatus operation device used by a user for selecting and settling the setting items, the apparatus operation device including a function control unit (110) causing an operation of said image forming apparatus to transit to an audio mode when the user is judged to be a visually handicapped user, and an operation control unit (120) controlling operations performed by the user in said audio mode, wherein said operation control unit (120) controls a menu control unit (160), an operational input unit (130), and an audio output unit (180) so as to cause the visually handicapped user to operate said image forming apparatus without using vision, the menu control unit (160) arranging operation items of said image forming apparatus as a multi-tier menu containing multiple tiers of the setting items and function numbers corresponding thereto so as to manage a shifting to an intended setting item in said multi-tier menu and a selection status of the setting item, the operational input unit (130) used by the user for inputting one of operations of shifting to the setting item and selecting the setting item in said multi-tier menu, and the audio output unit (180) informing the user of a result of the operation by outputting a sound and a voice according to one of said operations of shifting to the setting item and selecting the setting item in said multi-tier menu performed by the user.
